# EUROPÄISCHE PATENTANMELDUNG

(11) **EP 2 712 519 A2**
(43) Veröffentlichungstag der Anmeldung: **02.04.2014**
(21) Anmeldenummer: 13198396.7
(22) Anmeldetag: 03.05.2008
(51) Int. Cl.: A47B 87/00, F16B 12/20

(54) **Verbindungsmittel und Verfahren zum Herstellen einer Verbindung eines ersten Bauteils und eines zweiten Bauteils**

(30) Priorität: 08.05.2007 EP 07009267
(62) Teilanmeldung aus: 08749312.8
(71) Anmelder: Baur, Franz, 87534 Oberstaufen (DE); Haser, Franz, 87534 Oberstaufen (DE); Lamello AG, 4416 Bubendorf (CH)
(72) Erfinder: Baur, Franz, 87534 Oberstaufen (DE); Haser, Franz, 87534 Oberstaufen (DE); Schneider, Wilfried, 4416 Bubendorf (CH); Jeker, Patrick, 4225 Brislach (CH)
(74) Vertreter: Hoeger, Stellrecht & Partner Patentanwälte

(57) **Zusammenfassung**

Um ein Verbindungsmittel zum Verbinden eines ersten Bauteils und eines zweiten Bauteils, insbesondere zum Verbinden von Möbel- oder Maschinenteilen, umfassend ein im verbundenen Zustand der Bauteile an dem ersten Bauteil angeordnetes erstes Verbindungselement und ein im verbundenen Zustand der Bauteile an dem zweiten Bauteil angeordnetes zweites Verbindungselement, zu schaffen, das eine sichere Verbindung zweier Bauteile aus einer Vielzahl von Materialien miteinander ermöglicht, ohne die Gefahr einer Beschädigung der beiden Bauteile beim Zusammenbau hervorzurufen, wird vorgeschlagen, dass mindestens eines der Verbindungselemente mindestens einen nichtselbstschneidenden Haltevorsprung umfasst, welcher eine gekrümmte Abstützfläche aufweist, die in einem Längsschnitt kreisbogenförmig ist, wobei der Haltevorsprung in eine an einem der Bauteile vorgesehene Nut mit einer gekrümmten Hinterschneidungsfläche, die in einem Längsschnitt kreisbogenförmig ist, einführbar ist.

## Beschreibung

Die vorliegende Erfindung betrifft ein Verbindungsmittel zum Verbinden eines ersten Bauteils und eines zweiten Bauteils, insbesondere zum Verbinden von Möbel- oder Maschinenteilen, umfassend
ein im verbundenen Zustand der Bauteile an dem ersten Bauteil angeordnetes erstes Verbindungselement und
ein im verbundenen Zustand der Bauteile an dem zweiten Bauteil angeordnetes zweites Verbindungselement.

Ein solches Verbindungsmittel ist beispielsweise aus der DE 196 04 243 C2 bekannt.

Die DE 196 04 243 C2 offenbart einen Beschlag zum Verbinden von Bauteilen, bestehend aus zwei Beschlaghälften, die jeweils an einem der zu verbindenden Bauteile befestigt werden und miteinander in Eingriff bringbare Elemente aufweisen, die die Verbindung der Bauteile bewirken, wobei jede der Beschlaghälften einen kreissegmentförmigen Abschnitt mit selbstschneidenden vorspringenden Kanten aufweist, so dass jede Beschlaghälfte durch Eintreiben in das jeweils zugeordnete Bauteil längs der selbstschneidenden Kanten in dem jeweiligen Bauteil verankerbar ist. Bei harten Materialien, wie beispielsweise Hartholz oder metallischen Materialien, ist das Eintreiben der Beschlaghälften in die Bauteile längs der selbstschneidenden Kanten äußerst schwierig oder gar unmöglich. Zudem besteht bei dem Beschlag gemäß der DE 196 04 243 C2 die Gefahr, dass die seitlichen Wandungen des jeweiligen Bauteils beim Einschlagen der Beschlaghälften infolge der durch die vorstehenden selbstschneidenden Kanten auftretenden Kräfte wegbrechen können.

Der vorliegenden Erfindung liegt die Aufgabe zugrunde, ein Verbindungsmittel der eingangs genannten Art zu schaffen, das eine sichere Verbindung zweier Bauteile aus einer Vielzahl von Materialien miteinander ermöglicht, ohne die Gefahr einer Beschädigung der beiden Bauteile beim Zusammenbau hervorzurufen.

Diese Aufgabe wird bei einem Verbindungsmittel mit den Merkmalen des Oberbegriffs von Anspruch 1 erfindungsgemäß dadurch gelöst, dass mindestens eines der Verbindungselemente mindestens einen nicht-selbstschneidenden Haltevorsprung umfasst, welcher eine gekrümmte Abstützfläche aufweist, die in einem Längsschnitt kreisbogenförmig ist,
wobei der Haltevorsprung in eine an einem der Bauteile vorgesehene Nut mit einer gekrümmten Hinterschneidungsfläche, die in einem Längsschnitt kreisbogenförmig ist, einführbar ist.

Der erfindungsgemäßen Lösung liegt das Konzept zugrunde, das Verbindungselement mit dem mindestens einen Haltevorsprung in eine bereits vor dem Einbringen des Verbindungselements in das Bauteil hergestellte Nut mit einem Hinterschneidungsabschnitt in dem betreffenden Bauteil in der Längsrichtung der Nut einzuschieben. Hierdurch lässt sich der Haltevorsprung mit geringem Kraftaufwand in dem Hinterschneidungsabschnitt der Nut in Tangentialrichtung verschieben, so dass das Verbindungselement in dieser Richtung noch einen Bewegungsfreiheitsgrad besitzt und somit beim Verbinden der Bauteile noch Korrekturen bezüglich der gegenseitigen Positionen möglich sind.

Ferner kann sich der Haltevorsprung mit seiner gekrümmten Abstützfläche an der ebenfalls gekrümmten Hinterschneidungsfläche des Hinterschneidungsabschnitts der Nut in dem zugehörigen Bauteil abstützen, wobei diese Hinterschneidungsfläche ebenfalls in einem Längsschnitt kreisbogenförmig ist und denselben Krümmungsradius aufweist wie die gekrümmte Abstützfläche des Haltevorsprungs. Durch den Eingriff zwischen dem Haltevorsprung und dem Hinterschneidungsabschnitt der Nut ergibt sich eine formschlüssige Verbindung zwischen dem Bauteil und dem Verbindungselement.

Hierdurch wird eine besonders wirksame Verankerung mindestens eines der Verbindungselemente in dem zugehörigen Bauteil erreicht, ohne dass hierfür beim Einbringen des Verbindungselements in das zugeordnete Bauteil eine große Kraft aufgewendet werden müsste, welche zu einer Beschädigung des Bauteils führen könnte.

Im Gegensatz hierzu müssen bei dem Einbringen der Beschlaghälften des Beschlags aus der DE 196 04 243 C2 in die Bauteile Haltenuten für die Beschlaghälften mittels der selbstschneidenden vorspringenden Kanten durch Einschlagen der Beschlaghälften in die Bauteile erst ausgeräumt werden. Hierfür ist ein ganz erheblicher Kraftaufwand erforderlich. Ferner müssen die selbstschneidenden vorspringenden Kanten geometrisch auf die selbstschneidende Wirkung hin optimiert sein, insbesondere hinreichend dünn sein, um eine Verdrängung des ausgeräumten Materials zu ermöglichen. Ferner kann es beim Einschlagen der Beschlaghälften in die Bauteile leicht zum Abplatzen von Material von den Bauteilaußenkanten kommen, insbesondere dann, wenn die Beschlaghälften am Rande des Bauteils eingeschlagen werden. Bei festen Materialien, wie beispielsweise Hartholz, ist das Eintreiben der Beschlaghälften äußerst schwierig; bei anderen Materialien, wie beispielsweise Plexiglas oder bei metallischen Materialien, versagt das selbstschneidende Eintreiben der Beschlaghälften völlig. Ferner sitzen die Beschlaghälften nach dem Einschlagen in das jeweilige Bauteil dort unbeweglich fest und können nicht mehr längs der Haltenut verschoben werden, um eine Positionskorrektur und damit einen Ausgleich von Toleranzen zu ermöglichen.

Das erfindungsgemäße Verbindungsmittel kann hingegen zur Verbindung von Bauteilen aus beliebigen Materialien, insbesondere auch aus Hartholz, Plexiglas oder aus metallischen Materialien, verwendet werden und ermöglicht durch die Verschiebbarkeit mindestens eines Verbindungselements in der Längsrichtung der Nut, in welcher das Verbindungselement aufgenommen ist, eine Positionskorrektur und damit einen Ausgleich von Lagetoleranzen der Nuten in den Bauteilen und/oder einen Ausgleich von Herstellungstoleranzen der Verbindungselemente.

Vorzugsweise umfasst mindestens eines der Verbindungselemente ferner eine gekrümmte Anlagefläche, die in einem Längsschnitt kreisbogenförmig ist, so dass diese Anlagefläche an einer ebenfalls im Längsschnitt kreisbogenförmigen Nutgrundfläche einer an einem der Bauteile vorgesehenen Nut abgleiten kann, wodurch die Ausrichtung des betreffenden Verbindungselements relativ zu dem jeweils anderen Verbindungselement innerhalb gewisser Grenzen bei der Verbindung der Verbindungselemente verändert werden kann, um Lagetoleranzen der Nuten, in denen die Verbindungselemente angeordnet sind, und/oder Herstellungstoleranzen der Verbindungselemente auszugleichen.

Durch diesen zusätzlichen Bewegungsfreiheitsgrad sind beim Zusammenbau der beiden Bauteile noch Korrekturen bezüglich der gegenseitigen Positionen möglich, was die Ansprüche an die Präzision bezüglich der Lage der Nuten in den Bauteilen deutlich reduziert und zu einer erheblichen Erleichterung für den Anwender führt.

Der Haltevorsprung kann insbesondere stumpfe Enden und/oder abgerundete Einlaufschrägen an seinen Endbereichen aufweisen.

Ein nicht-selbstschneidender Haltevorsprung kann ferner eine beliebig große Querschnittsfläche aufweisen, um die mechanische Stabilität des Haltevorsprungs zu erhöhen.

Insbesondere kann die Querschnittsfläche des Haltevorsprungs mindestens 1 mm² betragen.

Der Haltevorsprung kann einen im Wesentlichen rechteckigen oder einen im Wesentlichen trapezförmigen Querschnitt aufweisen.

Alternativ oder ergänzend hierzu kann vorgesehen sein, dass mindestens ein Haltevorsprung sich mit wachsendem Abstand von einem Grundkörper des jeweiligen Verbindungselements verjüngt.

Andererseits kann vorgesehen sein, dass mindestens ein Haltevorsprung sich mit abnehmendem Abstand von einem Grundkörper des jeweiligen Verbindungselements verjüngt.

Alternativ oder ergänzend hierzu ist auch denkbar, dass mindestens ein Haltevorsprung einen Querschnitt mit einer zumindest abschnittsweise gekrümmten Außenkontur aufweist.

Bei einer bevorzugten Ausgestaltung der Erfindung ist vorgesehen, dass mindestens ein Haltevorsprung im Wesentlichen flächenbündig an eine gekrümmte Anlagefläche eines Grundkörpers des jeweiligen Verbindungselements angrenzt. In diesem Fall ist der Haltevorsprung also an dem dem Nutgrund zugewandten äußersten Rand des zugehörigen Verbindungselements angeordnet.

Alternativ oder ergänzend hierzu kann auch vorgesehen sein, dass mindestens ein Haltevorsprung gegenüber der gekrümmten Anlagefläche eines Grundkörpers des jeweiligen Verbindungselements versetzt angeordnet ist. Der Haltevorsprung kann also insbesondere einen kleineren Krümmungsradius aufweisen als die gekrümmte Anlagefläche des jeweiligen Verbindungselements.

Fernern kann vorgesehen sein, dass an demselben Verbindungselement mehrere Haltevorsprünge angeordnet sind, welche unterschiedliche Krümmungsradien aufweisen.

Insbesondere können mehrere Haltevorsprünge mit unterschiedlichen Krümmungsradien auf derselben Seite des jeweiligen Verbindungselements angeordnet sein.

Die gekrümmte Anlagefläche des Grundkörpers des jeweiligen Verbindungselements kann insbesondere in einem Längsschnitt kreisbogenförmig sein.

Die gekrümmte Anlagefläche mindestens eines Verbindungselements kann insbesondere im Wesentlichen kreiszylindermantelausschnittsförmig ausgebildet sein.

Bei einer bevorzugten Ausgestaltung der Erfindung ist vorgesehen, dass das erste Verbindungselement und das zweite Verbindungselement im verbundenen Zustand der Bauteile lösbar miteinander verbunden sind und zumindest das erste Verbindungselement mindestens ein relativ zu einem Gehäuse des ersten Verbindungselements bewegliches Halteelement umfasst, das in einer Haltestellung so mit dem zweiten Verbindungselement zusammenwirkt, dass eine Relativbewegung des ersten Verbindungselements und des zweiten Verbindungselements längs einer Verbindungsrichtung verhindert wird, und das in einer Freigabestellung eine Relativbewegung des ersten Verbindungselements und des zweiten Verbindungselements längs der Verbindungsrichtung zulässt, wobei mindestens ein Halteelement durch eine Einwirkung von außerhalb des Verbindungsmittels von der Haltestellung in die Freigabestellung und/oder von der Freigabestellung in die Haltestellung bewegbar ist.

Bei dieser Ausgestaltung wird die Verbindung der beiden Verbindungselemente nicht durch eine Relativverschiebung der beiden Verbindungselemente als Ganzes hergestellt, sondern stattdessen durch eine Relativbewegung des Halteelements relativ zu einem Gehäuse des ersten Verbindungselements von der Freigabestellung in die Haltestellung bewirkt. Alternativ oder ergänzend hierzu kann die Verbindung zwischen den Verbindungselementen durch eine Bewegung des Halteelements relativ zu dem Gehäuse des ersten Verbindungselements von der Haltestellung in die Freigabestellung gelöst werden.

Werden die Verbindungselemente durch das Bewegen des Halteelements in die Haltestellung gegeneinander verriegelt, so wird durch Zugkräfte, welche auf die Verbindungselemente in einer quer, vorzugsweise senkrecht, zu Anlegeflächen der Verbindungselemente gerichteten Verbindungsrichtung wirken, so viel Reibung aktiviert, dass die Verschiebbarkeit des Haltevorsprungs innerhalb des Hinterschneidungsabschnitts der Nut aufgehoben wird und eine völlig feste Verbindung zwischen den zu verbindenden Bauteilen hergestellt wird.

Die Verbindungselemente des erfindungsgemäßen Verbindungsmittels werden in an den Bauteilen bereits vorhandene Nuten eingebracht, so dass kein hoher Kraftaufwand zum Einbringen der Verbindungselemente in die Bauteile erforderlich ist und daher keine Gefahr einer Beschädigung dieser Bauteile besteht.

Wenn das Halteelement des erfindungsgemäßen Verbindungsmittels von der Haltestellung in die Freigabestellung bewegt worden ist, können die Verbindungselemente in einer senkrecht zu Anlegeflächen der Verbindungselemente, an denen die Verbindungselemente im verbundenen Zustand der Bauteile aneinander anliegen, gerichteten Verbindungsrichtung voneinander wegbewegt werden, ohne dass die Verbindungselemente zuvor in einer zu den Anlegeflächen parallelen Richtung relativ zueinander bewegt werden müssen.

Bei einer bevorzugten Ausgestaltung der Erfindung ist vorgesehen, dass das Gehäuse des ersten Verbindungselements eine gekrümmte Anlagefläche, die in einem Längsschnitt kreisbogenförmig ist, und eine dieser Anlagefläche gegenüberliegende im Wesentlichen ebene Anlegefläche, die an das zweite Verbindungselement anlegbar ist, aufweist.

Insbesondere kann vorgesehen sein, dass die im Wesentlichen ebene Anlegefläche des ersten Verbindungselements an eine ebenfalls im Wesentlichen ebene Anlegefläche des zweiten Verbindungselements anlegbar ist.

Die im Wesentlichen ebene Anlegefläche des ersten Verbindungselements und/oder des zweiten Verbindungselements ist vorzugsweise im verbundenen Zustand der Bauteile im Wesentlichen parallel zu Kontaktflächen der Bauteile, an welchen die Bauteile aneinander anliegen, ausgerichtet.

Ferner sind im verbundenen Zustand der Bauteile die gekrümmte Anlagefläche und die im Wesentlichen ebene Anlegefläche des ersten Verbindungselements und/oder des zweiten Verbindungselements im Wesentlichen senkrecht zur Verbindungsrichtung ausgerichtet.

Bei einer bevorzugten Ausführungsform der Erfindung ist vorgesehen, dass mindestens ein Halteelement schwenkbar an dem ersten Verbindungselement gehalten ist.

Um die Verbindung der beiden Verbindungselemente in der Haltestellung des Halteelements zu bewirken, kann vorgesehen sein, dass mindestens ein Halteelement eine erste Haltekontur aufweist, welche in der Haltestellung eine an dem zweiten Verbindungselement vorgesehene zweite Haltekontur hintergreift.

Dabei können die erste Haltekontur und/oder die zweite Haltekontur bogenförmig ausgebildet sein.

Insbesondere kann vorgesehen sein, dass die erste Haltekontur und die zweite Haltekontur nicht konzentrisch zueinander ausgebildet sind, so dass die beiden Verbindungselemente beim Bewegen des Halteelements von der Freigabestellung in die Haltestellung gegeneinander gezogen werden.

Zu der Art und Weise, wie das Halteelement durch eine Einwirkung von außerhalb des Verbindungsmittels von der Haltestellung in die Freigabestellung oder in umgekehrter Richtung bewegbar ist, wurden bislang noch keine näheren Angaben gemacht.

Beispielsweise kann vorgesehen sein, dass mindestens ein Halteelement mittels eines von außerhalb des Verbindungselements mit dem Halteelement in Eingriff bringbaren mechanischen Betätigungsmittels von der Haltestellung in die Freigabestellung und/oder von der Freigabestellung in die Haltestellung bewegbar ist.

Hierfür ist es günstig, wenn mindestens ein Halteelement eine Aufnahme für einen Betätigungsabschnitt eines mechanischen Betätigungsmittels aufweist.

Insbesondere kann vorgesehen sein, dass mindestens ein Halteelement eine Aufnahme für einen Mehrkantschlüssel, einen Inbusschlüssel und/oder einen Schraubendreher aufweist.

Um eine Einwirkung des mechanischen Betätigungsmittels auf das Halteelement zu ermöglichen, kann vorgesehen sein, dass das erste Verbindungselement ein Gehäuse mit einer Durchtrittsöffnung für den Durchtritt eines mechanischen Betätigungsmittels zu einem Halteelement umfasst.

Insbesondere kann vorgesehen sein, dass das Gehäuse eine sich quer zur gekrümmten Anlagefläche des ersten Verbindungselements erstreckende Seitenwand aufweist und die Durchtrittsöffnung in der Seitenwand angeordnet ist.

Alternativ hierzu kann auch vorgesehen sein, dass die Durchtrittsöffnung an der gekrümmten Anlagefläche des ersten Verbindungselements angeordnet ist.

Bei einer besonderen Ausgestaltung der Erfindung kann vorgesehen sein, dass zumindest das erste Verbindungselement mindestens zwei Halteelemente umfasst, die schwenkbar an dem ersten Verbindungselement gehalten sind.

Um die Verbindung der beiden Verbindungselemente in der Haltestellung der Halteelemente zu gewährleisten, kann vorgesehen sein, dass mindestens zwei Halteelemente in der Haltestellung jeweils ein Rückhalteelement, das an dem zweiten Verbindungselement angeordnet ist, hintergreifen.

Um die Halteelemente von der Freigabestellung in die Haltestellung schwenken zu können, kann insbesondere vorgesehen sein, dass ein Abstützbereich eines ersten Halteelements und ein Abstützbereich eines zweiten Halteelements mittels eines Spreizmechanismus relativ zueinander bewegbar sind.

Ein solcher Spreizmechanismus kann ein Magnetelement umfassen, das mittels eines von außerhalb des Verbindungsmittels auf das Magnetelement einwirkenden zeitlich veränderlichen Antriebsmagnetfeldes zu einer Bewegung innerhalb des Verbindungsmittels antreibbar ist.

Bei einer bevorzugten Ausgestaltung der Erfindung ist vorgesehen, dass der Spreizmechanismus mindestens zwei Spreizelemente umfasst, die miteinander in Eingriff stehen.

Insbesondere können die Spreizelemente mittels zweier zueinander komplementärer Gewinde miteinander in Eingriff stehen.

Besonders günstig ist es, wenn mindestens eines der Spreizelemente mittels des Magnetelements zu einer Drehbewegung relativ zu dem anderen Spreizelement antreibbar ist.

Dabei kann das Magnetelement insbesondere ein Mitnehmerelement aufweisen, das auf ein Mitnahmeelement an einem der Spreizelemente einwirkt.

Ferner kann bei einer besonderen Ausgestaltung der Erfindung vorgesehen sein, dass mindestens ein Halteelement ein Gewinde aufweist.

Dabei kann vorgesehen sein, dass mindestens ein Halteelement in der Haltestellung mit einem Rückhalteelement, das an dem zweiten Verbindungselement angeordnet ist, in Eingriff steht, wobei das Rückhalteelement ein zu dem Gewinde des Halteelements komplementäres Gewinde aufweist.

Um das Ineingriffkommen des Halteelements mit dem Rückhalteelement zu erleichtern, kann vorgesehen sein, dass das Verbindungsmittel mindestens ein elastisches Element, insbesondere eine Feder, umfasst, durch welches das Halteelement und das Rückhalteelement gegeneinander vorgespannt sind.

Ferner kann eine Gewindeachse des Halteelements im verbundenen Zustand der Bauteile im Wesentlichen parallel zur Verbindungsrichtung ausgerichtet sein.

Bei einer besonderen Ausgestaltung der Erfindung kann vorgesehen sein, dass das Verbindungsmittel ein Magnetelement umfasst, das mittels eines von außerhalb des Verbindungsmittels auf das Magnetelement einwirkenden zeitlich veränderlichen Antriebsmagnetfeldes zu einer Drehbewegung innerhalb des Verbindungsmittels antreibbar ist.

Mittels eines solchen Magnetelements kann insbesondere mindestens ein Halteelement zu einer Drehbewegung relativ zu dem Gehäuse des ersten Verbindungselements antreibbar sein.

Dabei kann das Magnetelement ein Mitnehmerelement aufweisen, das auf ein Mitnahmeelement an dem Halteelement einwirkt.

Um mittels der Verbindung zwischen den Verbindungselementen auch Scherkräfte abtragen zu können, ist es von Vorteil, wenn mindestens eines der Verbindungselemente mindestens einen Einsteckvorsprung und das jeweils andere Verbindungselement mindestens eine den Einsteckvorsprung im verbundenen Zustand der Bauteile aufnehmende Aufnahmetasche umfasst. Hierdurch kann auf zusätzliche Dübel, wie sie bei den meisten anderen Verbindungsmitteln erforderlich sind, verzichtet werden.

Wenn mindestens eine Aufnahmetasche in einer Längsrichtung des Verbindungsmittels eine größere Ausdehnung aufweist als der darin aufgenommene Einsteckvorsprung, so bietet dies den Vorteil, dass sich das erste Verbindungselement und das zweite Verbindungselement in der Längsrichtung gegeneinander verschieben lassen, um auf diese Weise einen Toleranzausgleich der Verbindung zwischen den Bauteilen zu ermöglichen.

Alternativ zu einer Verbindung der beiden Verbindungselemente durch ein bewegliches Halteelement kann auch vorgesehen sein, dass das erste Verbindungselement und das zweite Verbindungselement im verbundenen Zustand der Bauteile stoffschlüssig miteinander verbunden sind.

Insbesondere kann vorgesehen sein, dass das erste Verbindungselement und das zweite Verbindungselement im verbundenen Zustand der Bauteile miteinander verklebt sind.

Die vorliegende Erfindung betrifft ferner ein Verfahren zum Herstellen einer Verbindung eines ersten Bauteils und eines zweiten Bauteils, insbesondere einer Verbindung von Möbel- oder Maschinenteilen.

Der vorliegenden Erfindung liegt die Aufgabe zugrunde, ein solches Verfahren zu schaffen, welches eine sichere Verbindung von Bauteilen aus einer Vielzahl von Materialien miteinander ermöglicht, ohne die Gefahr einer Beschädigung eines der Bauteile hervorzurufen.

Diese Aufgabe wird durch ein Verfahren gelöst, welches die folgenden Verfahrensschritte umfasst:
- Herstellen jeweils einer Nut an einer Kontaktfläche des ersten Bauteils und an einer Kontaktfläche des zweiten Bauteils, wobei mindestens eine der Nuten mindestens einen Hinterschneidungsabschnitt mit einer gekrümmten Hinterschneidungsfläche aufweist, die in einem Längsschnitt kreisbogenförmig ist;
- Einbringen eines ersten Verbindungselements in die Nut des ersten Bauteils und eines zweiten Verbindungselements in die Nut des zweiten Bauteils, wobei mindestens eines der Verbindungselemente mindestens einen Haltevorsprung mit einer gekrümmten Abstützfläche umfasst, die in einem Längsschnitt kreisbogenförmig ist;
- Verbinden des ersten Verbindungselements und des zweiten Verbindungselements.

Besondere Ausgestaltungen des erfindungsgemäßen Verfahrens sind Gegenstand der Ansprüche 41 bis 60, deren Vorteile bereits vorstehend im Zusammenhang mit den besonderen Ausgestaltungen des erfindungsgemäßen Verbindungsmittels erläutert worden sind.

Ferner betrifft die vorliegende Erfindung eine Nutfräsvorrichtung zum Fräsen einer Nut in einem Bauteil, welche eine um eine Rotationsachse drehbare Frässcheibe umfasst, insbesondere zur Durchführung des Verfahrens nach einem der Ansprüche 40 bis 60.

Der vorliegenden Erfindung liegt die Aufgabe zugrunde, eine solche Nutfräsvorrichtung zu schaffen, mit welcher in einfacher und präziser Weise eine Nut hergestellt werden kann, welche mindestens einen Hinterschneidungabschnitt mit einer gekrümmten Hinterschneidungsfläche aufweist.

Diese Aufgabe wird bei einer Nutfräsvorrichtung mit den Merkmalen des Oberbegriffs von Anspruch 61 erfindungsgemäß dadurch gelöst, dass die Nutfräsvorrichtung eine Hubeinrichtung zum Bewegen der Frässcheibe längs der Rotationsachse während des Fräsvorgangs umfasst.

Mittels einer solchen Nutfräsvorrichtung kann zunächst ein Basisabschnitt der Nut gefräst werden und dann, wenn der Basisabschnitt eine vorgegebene Tiefe erreicht hat, die Frässcheibe längs der Rotationsachse bewegt werden, um mindestens einen Hinterschneidungsabschnitt zu fräsen.

Die erfindungsgemäße Nutfräsvorrichtung kann insbesondere einen Anschlag zur Begrenzung der Tiefe der gefrästen Nut umfassen.

Ferner kann die Nutfräsvorrichtung einen Schalter zur Betätigung der Hubeinrichtung durch eine Bedienungsperson während des Fräsvorgangs umfassen, um die Bewegung der Frässcheibe längs der Rotationsachse manuell auslösen zu können.

Alternativ oder ergänzend hierzu kann auch vorgesehen sein, dass die Nutfräsvorrichtung eine Steuereinrichtung umfasst, welche die Hubeinrichtung bei Erreichen einer vorgegebenen Tiefe der gefrästen Nut während des Fräsvorgangs automatisch betätigt. Auf diese Weise wird erreicht, dass die Frässcheibe sofort längs der Rotationsachse zur Erzeugung des Hinterschneidungsabschnitts bewegt werden kann, sobald die vorgegebene Nuttiefe erreicht ist; dies kann die für den gesamten Nutfräsvorgang benötigte Zeit erheblich verkürzen.

Bei einer bevorzugten Ausgestaltung der Erfindung ist vorgesehen, dass die Frässcheibe mittels der Hubeinrichtung aus einer Grundstellung längs der Rotationsachse in eine erste Hinterschneidungsstellung und anschließend in entgegengesetzter Richtung, über die Grundstellung hinaus, in eine zweite Hinterschneidungsstellung bewegbar ist. Auf diese Weise kann eine Nut mit zwei in einander entgegengesetzte Richtungen von einem Basisabschnitt der Nut abstehenden Hinterschneidungsabschnitten hergestellt werden.

Vorzugsweise ist die Strecke, um welche die Frässcheibe mittels der Hubeinrichtung längs der Rotationsachse bewegbar ist, auf verschiedene Werte einstellbar.

Die für die Betätigung der Hubeinrichtung erforderliche Energie kann beispielsweise mittels eines an eine Hauptantriebsspindel der Nutfräsvorrichtung angekoppelten Generators erzeugbar sein.

Der Generator kann dabei insbesondere als eine Wirbelstromkupplung ausgebildet sein.

Ferner betrifft die vorliegende Erfindung eine Nutfräsvorrichtung zum Fräsen einer Nut in einem Bauteil, welche einen T-Nuten-Fräser, der um eine Radialrichtung der Nut drehbar ist, umfasst, insbesondere zur Durchführung des Verfahrens nach einem der Ansprüche 40 bis 60.

Der vorliegenden Erfindung liegt die Aufgabe zugrunde, eine solche Nutfräsvorrichtung zu schaffen, mit welcher eine Nut mit mindestens einem Hinterschneidungsabschnitt mit einer gekrümmten Hinterschneidungsfläche, die in einem Längsschnitt kreisbogenförmig ist, in einfacher und präziser Weise herstellbar ist.

Diese Aufgabe wird bei einer Nutfräsvorrichtung mit den Merkmalen des Oberbegriffs von Anspruch 69 erfindungsgemäß dadurch gelöst, dass die Nutfräsvorrichtung eine Führungseinrichtung zum Führen der Nutfräsvorrichtung in einer vorgefrästen Führungsnut mit einer gekrümmten Nutgrundfläche, die in einem Längsschnitt kreisbogenförmig ist, umfasst.

Mit dieser erfindungsgemäßen Nutfräsvorrichtung kann eine vorgefräste Führungsnut ohne Hinterschneidungsabschnitte zu der gewünschten Nut mit Hinterschneidungsabschnitten erweitert werden.

Die Führungsnut kann dabei mit einer herkömmlichen Nutfräsvorrichtung vorgefräst werden.

Bei einer bevorzugten Ausgestaltung der erfindungsgemäßen Nutfräsvorrichtung ist vorgesehen, dass die Führungseinrichtung ein im Wesentlichen kreisscheibenausschnittsförmiges vorderes Führungselement umfasst, das in der Bewegungsrichtung der Nutfräsvorrichtung während des Fräsvorgangs vor dem T-Nuten-Fräser angeordnet ist.

Um eine stabile Führung der Nutfräsvorrichtung mittels des vorderen Führungselements in der vorgefrästen Führungsnut zu erzielen, ist es günstig, wenn die Dicke des vorderen Führungselements im Wesentlichen gleich groß ist wie die Breite der vorgefrästen Führungsnut.

Ferner ist es günstig, wenn die Führungseinrichtung ein im Wesentlichen kreisscheibenausschnittsförmiges hinteres Führungselement umfasst, das in der Bewegungsrichtung der Nutfräsvorrichtung während des Fräsvorgangs hinter dem T-Nuten-Fräser angeordnet ist. Auf diese Weise wird eine zusätzliche Führung der Nutfräsvorrichtung in der mittels des T-Nuten-Fräsers erzeugten Nut ermöglicht.

Um eine besonders stabile Führung an dem Basisabschnitt der von dem T-Nuten-Fräser gefrästen Nut zu ermöglichen, ist es günstig, wenn die Dicke des hinteren Führungselements im Wesentlichen gleich groß ist wie die Breite eines Basisabschnitts der von dem T-Nuten-Fräser gefrästen Nut.

Ferner kann das hintere Führungselement mit mindestens einem Führungszahn versehen sein, der während des Fräsvorgangs in einen Hinterschneidungsabschnitt der von dem T-Nuten-Fräser gefrästen Nut eingreift und dadurch die Nutfräsvorrichtung führt. Hierdurch wird eine besonders stabile Führung der Nutfräsvorrichtung an dem von dem T-Nuten-Fräser gefrästen Hinterschneidungsabschnitt ermöglicht.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung zwei miteinander zu verbindender Bauteile im unverbundenen Zustand, wobei jedes Bauteil jeweils eine Nut mit einem mittigen Basisabschnitt und zwei vom Basisabschnitt abstehenden bogenförmigen Hinterschneidungsabschnitten aufweist;
- Fig. 2: eine der Fig. 1 entsprechende schematische perspektivische Darstellung, in welche zusätzlich unsichtbare Kanten in gebrochenen Linien eingezeichnet sind;
- Fig. 3: einen schematischen Querschnitt durch das erste Bauteil aus den Fig. 1 und 2 im Bereich einer Zugangsbohrung;
- Fig. 4: eine schematische Seitenansicht des ersten Bauteils aus den Fig. 1 und 2;
- Fig. 5: eine schematische perspektivische Darstellung eines Verbindungsmittels zum Verbinden der beiden Bauteile aus den Fig. 1 bis 4, welches ein erstes Verbindungselement mit einem Halte element und ein zweites Verbindungselement mit einer Aufnahme für das Halteelement umfasst;
- Fig. 6: eine der Fig. 5 entsprechende schematische perspektivische Darstellung, in welche zusätzlich unsichtbare Kanten in gebrochenen Linien eingezeichnet sind;
- Fig. 7: eine schematische perspektivische Seitenansicht der durch das Verbindungsmittel aus den Fig. 5 und 6 miteinander verbundenen Bauteile;
- Fig. 8: eine schematische perspektivische Darstellung der beiden miteinander zu verbindenden Bauteile im unverbundenen Zustand, wobei in die Nut jedes Bauteils jeweils eines der Verbindungselemente eingesetzt ist;
- Fig. 9: eine der Fig. 8 entsprechende schematische perspektivische Darstellung, in die zusätzlich unsichtbare Kanten in gebrochenen Linien eingezeichnet sind;
- Fig. 10: eine schematische perspektivische Darstellung einer Nutfräsvorrichtung mit Hubeinrichtung, wobei eine drehbare Frässcheibe der Nutfräsvorrichtung in ein Gehäuse der Nutfräsvorrichtung zurückgezogen ist;
- Fig. 11: eine der Fig. 10 entsprechende schematische perspektivische Darstellung der Nutfräsvorrichtung, wobei die drehbare Frässcheibe teilweise aus dem Gehäuse der Nutfräsvorrichtung ausgefahren ist;
- Fig. 12 bis 15: eine Folge von schematischen Querschnitten durch ein Bauteil, durch welches mittels der Nutfräsvorrichtung aus den Fig. 10 und 11 eine Nut mit einem Basisabschnitt und zwei vom Basisabschnitt abstehenden Hinterschneidungsabschnitten gefräst wird;
- Fig. 16: eine schematische perspektivische Darstellung einer Nutfräsvorrichtung mit einem T-Nuten-Fräser und einer Führungseinrichtung zum Führen der Nutfräsvorrichtung in einer vorgefrästen Führungsnut;
- Fig. 17, 19 und 21: schematische Seitenansichten eines Bauteils, in welchem eine Nut mit einem Basisabschnitt und zwei von dem Basisabschnitt abstehenden bogenförmigen Hinterschneidungsabschnitten mittels der Nutfräsvorrichtung aus Fig. 16 gefräst wird;
- Fig. 18, 20 und 22: den Fig. 17, 19 bzw. 21 entsprechende schematische Querschnitte durch die an dem Bauteil ausgebildete Nut;
- Fig. 23: eine schematische Seitenansicht des ersten Bauteils, in dessen Nut das erste Verbindungselement eingesetzt wird;
- Fig. 24: eine schematische Seitenansicht beider Bauteile mit eingesetzten Verbindungselementen, die aufeinander zu bewegt werden;
- Fig. 25: eine schematische Seitenansicht der mit ihren Kontaktflächen aneinander anliegenden Bauteile und eines Mehrkantschlüssels, der durch eine Zugangsbohrung mit dem Halteelement des ersten Verbindungselements in Eingriff steht;
- Fig. 26: eine schematische Seitenansicht der beiden Bauteile und des Mehrkantschlüssels, mittels welchem das Halteelement von einer Freigabestellung in eine Haltestellung bewegt wird;
- Fig. 27: eine schematische Seitenansicht eines Gehäuses des ersten Verbindungselements;
- Fig. 28: einen schematischen Schnitt durch das Gehäuse des Verbindungselements aus Fig. 27, längs der Linie 28-28 in Fig. 27;
- Fig. 29 bis 31: der Fig. 28 entsprechende schematische Querschnitte durch das Gehäuse des Verbindungselements aus Fig. 27, wobei Haltevorsprünge des Gehäuses jeweils unterschiedliche Profile aufweisen;
- Fig. 32: eine schematische perspektivische Darstellung einer zweiten Ausführungsform des Verbindungsmittels, bei welcher das Halteteil des ersten Verbindungselements als ein Gewindeelement ausgebildet ist, das in ein an dem zweiten Verbindungselement vorgesehenes Rückhalteelement eingreifen kann;
- Fig. 33: eine der Fig. 32 entsprechende schematische perspektivische Darstellung, in die zusätzlich unsichtbare Kanten in gebrochenen Linien eingezeichnet sind;
- Fig. 34: eine schematische Seitenansicht der beiden Bauteile, die durch die zweite Ausführungsform des Verbindungsmittels miteinander verbunden sind;
- Fig. 35: eine schematische perspektivische Darstellung einer dritten Ausführungsform des Verbindungsmittels, bei welcher im ersten Verbindungselement ein Magnetelement zum Antreiben einer Drehbewegung eines Halteelements vorgesehen ist;
- Fig. 36: eine der Fig. 35 entsprechende schematische perspektivische Darstellung, in die zusätzlich unsichtbare Kanten in gebrochenen Linien eingezeichnet sind;
- Fig. 37: eine schematische Seitenansicht der beiden Bauteile, die durch die dritte Ausführungsform des Verbindungsmittels miteinander verbunden sind;
- Fig. 38: eine schematische Seitenansicht eines Magnetelements und eines Halteelements der dritten Ausführungsform des Verbindungsmittels aus den Fig. 35 bis 37 und eines Antriebsgeräts zum Erzeugen einer Drehbewegung des Magnetelements;
- Fig. 39: eine schematische Draufsicht von unten auf das Magnetelement und das Antriebsgerät aus Fig. 38, mit der Blickrichtung in Richtung des Pfeils 39 in Fig. 38;
- Fig. 40: eine schematische perspektivische Darstellung einer vierten Ausführungsform des Verbindungsmittels, bei welcher in dem ersten Verbindungselement zwei schwenkbare Halteelemente und ein Spreizmechanismus zum Auseinanderspreizen von Endbereichen der Halteelemente vorgesehen sind;
- Fig. 41: eine schematische Seitenansicht der vierten Ausführungsform des Verbindungsmittels, im unverbundenen Zustand der Bauteile;
- Fig. 42: eine der Fig. 41 entsprechende schematische Seitenansicht, wobei die miteinander zu verbindenden Bauteile aneinander anliegen und die Halteelemente sich in ihrer Freigabestellung befinden;
- Fig. 43: eine der Fig. 42 entsprechende schematische Seitenansicht der vierten Ausführungsform des Verbindungsmittels, wobei die Halteelemente sich in der Haltestellung befinden;
- Fig. 44: eine schematische Seitenansicht der vierten Ausführungsform des Verbindungsmittels, eines Magnetelements des Spreizmechanismus und eines Antriebsgeräts zum Drehen des Magnetelements;
- Fig. 45: eine schematische Draufsicht auf das Magnetelement und das Antriebsgerät aus Fig. 44, mit der Blickrichtung in Richtung des Pfeils 45 in Fig. 44;
- Fig. 46: eine schematische perspektivische Darstellung einer fünften Ausführungsform des Verbindungsmittels, bei welcher das erste Verbindungselement und das zweite Verbindungselement miteinander verklebt werden.
- Fig. 47: eine der Fig. 46 entsprechende schematische perspektivische Darstellung, in welche zusätzlich unsichtbare Kanten in gebrochenen Linien eingezeichnet sind; und
- Fig. 48: eine schematische Seitenansicht des Verbindungsmittels aus den Fig. 46 und 47 im verbundenen Zustand der Bauteile.

Gleiche oder funktional äquivalente Elemente sind in allen Figuren mit denselben Bezugszeichen bezeichnet.

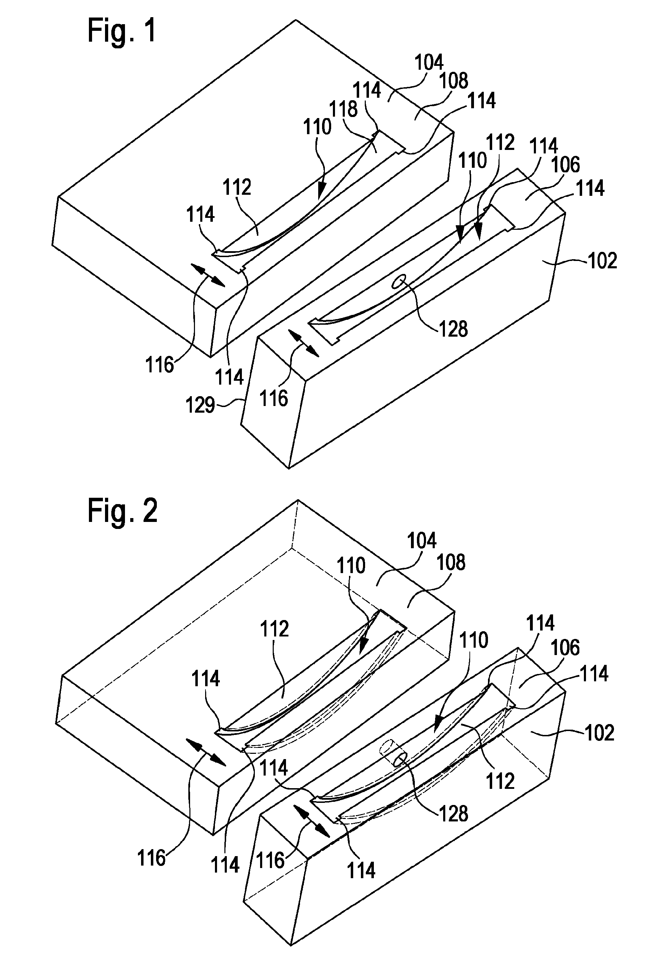

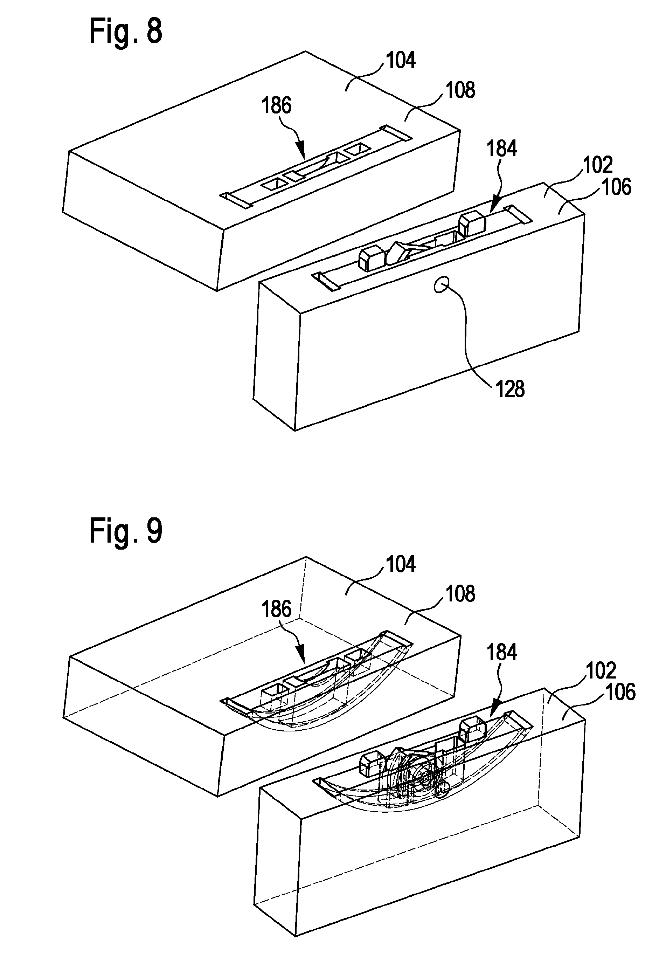

Eine in den Fig. 1 bis 9 dargestellte erste Ausführungsform eines als Ganzes mit 100 bezeichneten Verbindungsmittels wird im Folgenden am Beispiel einer Verbindung eines ersten, im Wesentlichen plattenförmigen Bauteils 102 mit einem zweiten, ebenfalls im Wesentlichen plattenförmigen Bauteil 104 erläutert (siehe Fig. 1 bis 4).

Die beiden Bauteile 102 und 104 bestehen beispielsweise aus Holz oder Sperrholz, können aber auch aus beliebigen anderen Materialien, beispielsweise aus einem metallischen Material oder einem Kunststoffmaterial (beispielsweise Plexiglas), bestehen. Ferner kann vorgesehen sein, dass das erste Bauteil 102 und das zweite Bauteil 104 aus voneinander verschiedenen Materialien bestehen.

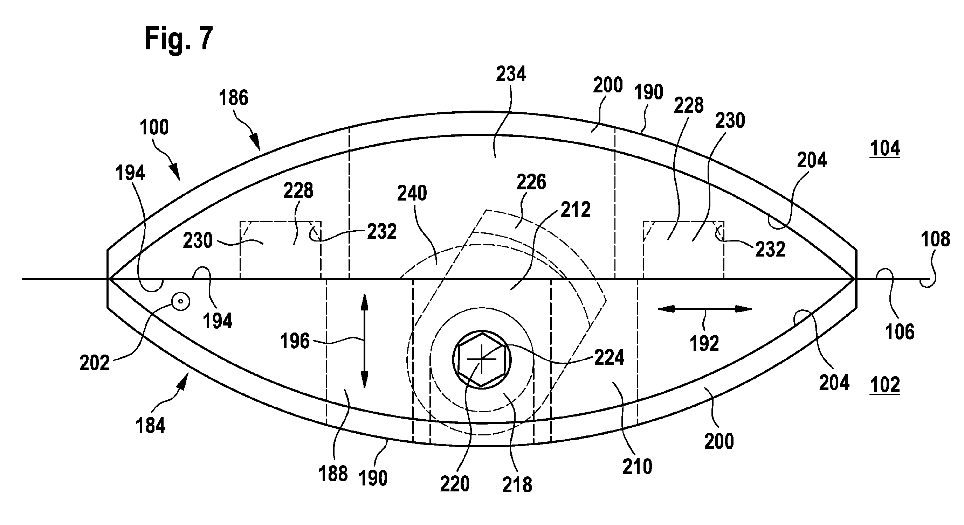

In dem in Fig. 7 dargestellten verbundenen Zustand der beiden Bauteile 102 und 104 liegt eine eine Schmalseite des ersten Bauteils 102 bildende Kontaktfläche 106 an einer eine Hauptfläche des plattenförmigen zweiten Bauteils 104 bildenden Kontaktfläche 108 des zweiten Bauteils 104 an.

Auf jede der Kontaktflächen 106, 108 mündet jeweils eine in dem betreffenden Bauteil 102 bzw. 104 ausgebildete Nut 110, welche einen kreiszylindersegment- oder kreiszylinderabschnittsförmigen Basisabschnitt 112 und zwei sich in einer Dickenrichtung 116 von dem Basisabschnitt 112 weg erstreckende Hinterschneidungsabschnitte 114 umfasst.

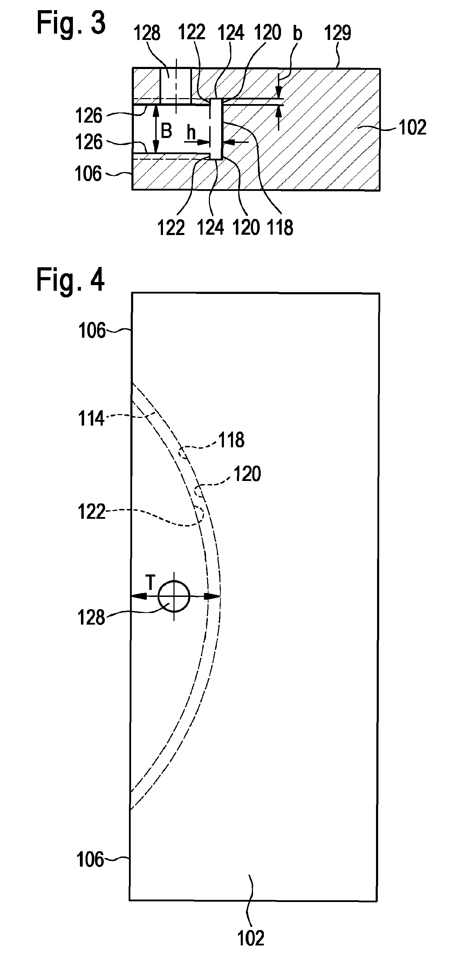

Der Krümmungsradius des Basisabschnitts 112 ist größer als die Nuttiefe T (siehe Fig. 4), so dass die gewölbte Nutgrundfläche 118 die jeweilige Kontaktfläche 106, 108 unter einem spitzen Winkel schneidet.

Der Basisabschnitt 112 der Nut 110 weist in der Dickenrichtung 116 eine Breite B von beispielsweise ungefähr 8 mm auf.

Jeder der Hinterschneidungsabschnitte 114 der Nut 110 wird auf seiner der jeweiligen Kontaktfläche 106 bzw. 108 abgewandten Seite durch eine mit der Nutgrundfläche 118 flächenbündige Grundfläche 120 begrenzt, welche kreiszylindermantelausschnittsförmig ausgebildet ist und denselben Krümmungsradius wie die Nutgrundfläche 118 des Basisabschnitts 112 aufweist.

In der Richtung auf die Kontaktfläche 106 bzw. 108 hin wird jeder Hinterschneidungsabschnitt 114 durch eine ebenfalls kreiszylindermantelausschnittsförmige Hinterschneidungsfläche 122 begrenzt, welche konzentrisch zu der Grundfläche 120 ausgebildet ist und einen kleineren Krümmungsradius aufweist.

Seitlich wird jeder der Hinterschneidungsabschnitte 114 durch eine senkrecht zur jeweiligen Kontaktfläche 106 bzw. 108 verlaufende seitliche Begrenzungsfläche 124 begrenzt.

Die Breite b, d.h. die Erstreckung in der Dickenrichtung 116, beträgt für jeden der Hinterschneidungsabschnitte 114 beispielsweise ungefähr 1 mm.

Die Höhe h, d.h. der Abstand zwischen der Grundfläche 120 und der Hinterschneidungsfläche 122, beträgt für jeden der Hinterschneidungsabschnitte 114 beispielsweise ungefähr 2 mm.

Der Basisabschnitt 112 jeder Nut 110 wird durch im Wesentlichen senkrecht zu der jeweiligen Kontaktfläche 106 bzw. 108 verlaufende seitliche Begrenzungswände 126 begrenzt, welche voneinander den Abstand der Nutbreite B aufweisen.

Wie beispielsweise aus Fig. 3 zu ersehen ist, mündet in die Nut 110 des ersten Bauteils 102 eine senkrecht zu einer der seitlichen Begrenzungswände 126 verlaufende, im Wesentlichen zylindrische Zugangsbohrung 128, deren anderes Ende an einer Hauptfläche 129 des plattenförmigen ersten Bauteils 102 mündet und so einen Zugang vom Außenraum des ersten Bauteils 102 zu dem Basisabschnitt 112 der Nut 110 ermöglicht.

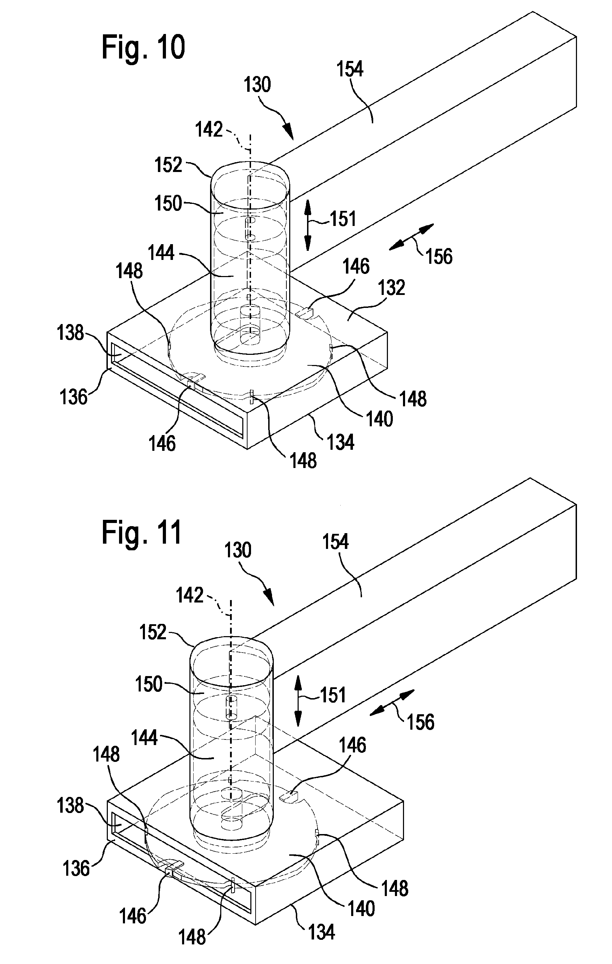

Um die vorstehend beschriebenen Nuten 110 an den Bauteilen 102 und 104 auszubilden, kann beispielsweise die in den Fig. 10 und 11 schematisch dargestellte Nutfräsvorrichtung 130 verwendet werden.

Diese Nutfräsvorrichtung 130 umfasst ein elektrisch isoliertes Gehäuse 132 mit einer im Wesentlichen ebenen unteren Anlagefläche 134 und einer hierzu rechtwinklig ausgerichteten, im Wesentlichen ebenen vorderen Anlagefläche 136.

Die vordere Anlagefläche 136 weist einen Durchtrittsschlitz 138 auf, durch welchen ein Abschnitt einer Frässcheibe 140 hindurchtreten kann, die im Innenraum des Gehäuses 132 um eine vertikale Rotationsachse 142 drehbar gehalten und mittels eines elektrischen Antriebsmotors 144 zu einer Drehbewegung um die Rotationsachse 142 antreibbar ist.

Die Frässcheibe 140 weist an ihrem Umfang in radialer Richtung vorstehende Fräszähne 146 zum Fräsen des Basisabschnitts 112 einer Nut 110 und in axialer Richtung vorstehende Ringnutzähne 148 auf, welche zum Fräsen der Hinterschneidungsabschnitte 114 dienen.

Der Antriebsmotor 144 und die daran gehaltene Frässcheibe 140 sind mittels einer Hubeinrichtung 150 längs der Axialrichtung 151 der Frässcheibe 140 automatisch anheb- oder absenkbar. Die Hubeinrichtung 150 und der Antriebsmotor 144 sind in einer Antriebseinheit 152 der Nutfräsvorrichtung 130 untergebracht, welche mittels eines daran angeordneten Handgriffs 154 relativ zu dem Gehäuse 132 längs einer radial zur Rotationsachse 142 der Frässcheibe 140 und senkrecht zur vorderen Anschlagfläche 136 verlaufenden Verschieberichtung 156 verschiebbar ist.

Die Hubeinrichtung 150 zur axialen Bewegung der Frässcheibe 140 kann als normaler Elektromotor mit Getriebe oder als Schrittmotor ausgeführt sein.

Die erforderliche Energie für die Hubbewegung kann mittels eines Netzteiles oder eines Generators, der an die Hauptantriebsspindel der Nutfräsvorrichtung 130 angekoppelt ist, erzeugt werden.

Insbesondere kann der Generator als eine elektrisch steuerbare Wirbelstromkupplung ausgeführt sein, wobei ein beliebig regelbares Drehmoment auf eine Hubmechanik übertragen werden kann, die mechanisch, ohne Verwendung eines zusätzlichen Motors, dieses Drehmoment in eine Hubbewegung der Frässcheibe 140 umsetzt, beispielsweise mittels einer Kulissensteuerung oder mit Hilfe einer verstellbaren Taumelscheibe.

Die Hubstrecke, um welche die Frässcheibe 140 bei Betätigung der Hubeinrichtung 150 längs der Axialrichtung 151 angehoben oder abgesenkt wird, ist manuell mittels eines Wahlschalters oder mittels einer CNC-Steuerung einstellbar.

Die Arbeitsweise der vorstehend beschriebenen Nutfräsvorrichtung 130 ist die folgende:
Die Nutfräsvorrichtung 130 wird mit der vorderen Anlagefläche 136 an die Kontaktfläche 106 des Bauteils (beispielsweise des ersten Bauteils 102), an welchem die Nut 110 ausgebildet werden soll, angelegt.

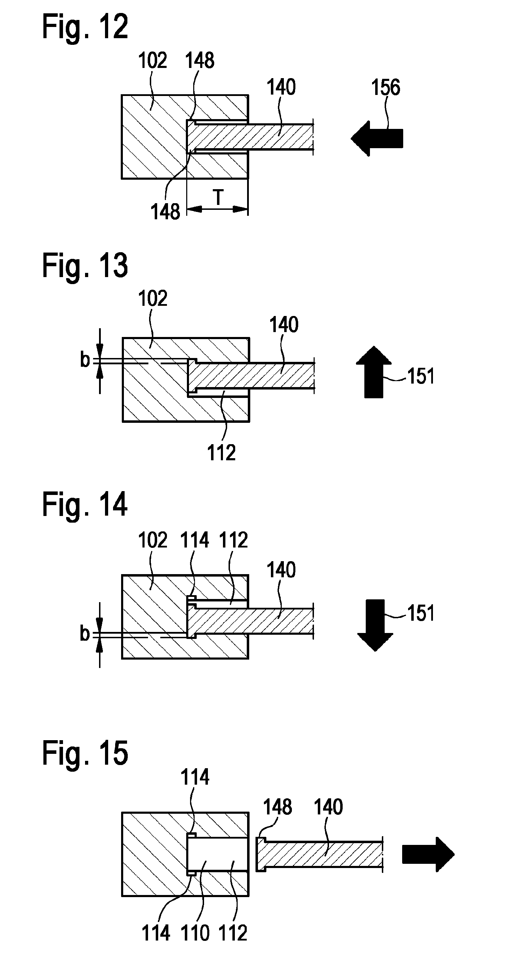

Anschließend wird die Frässcheibe 140 in Drehbewegung versetzt und mittels des Handgriffs 154 aus dem Gehäuse 132 heraus gegen das zu bearbeitende Bauteil 102 verschoben, so dass die Frässcheibe 140 aus dem Bauteil 102 einen kreiszylinderabschnittsförmigen Basisabschnitt 112 mit wachsender Nuttiefe herausfräst (siehe Fig. 12).

Wenn die gewünschte Nuttiefe T erreicht ist, wird ein Hubvorgang der Frässcheibe 140 mittels der Hubeinrichtung 150 ausgelöst, worauf die Frässcheibe 140 um die gewünschte Breite b des Hinterschneidungsabschnitts 114 längs der Axialrichtung 151 nach oben bewegt wird und dabei mittels der Ringnutzähne 148 den oberen Hinterschneidungsabschnitt 114 der Nut 110 fräst (siehe Fig. 13).

Anschließend wird die Frässcheibe 140 in der Gegenrichtung nach unten zurück in die Ausgangslage und darüber hinaus um die gewünschte Breite b des Hinterschneidungsabschnitts 114 weiter nach unten bewegt, wobei die Ringnutzähne 148 der Frässcheibe 140 nunmehr den unteren Hinterschneidungsabschnitt 114 fräsen (siehe Fig. 14).

Wenn auch der untere Hinterschneidungsabschnitt 114 gefräst ist, wird die Frässcheibe 140 längs der Axialrichtung 151 nach oben in ihre Ausgangslage zurückbewegt und längs der Verschieberichtung 156 durch Zurückziehen des Handgriffs 154 aus der fertiggestellten Nut 110 herausbewegt (siehe Fig. 15).

Die Auslösung des Hubvorgangs kann beispielsweise mittels eines von Hand zu betätigenden Schalters an der Nutfräsvorrichtung 130 erfolgen.

Alternativ hierzu kann auch vorgesehen sein, dass die Nutfräsvorrichtung 130 einen Tiefentaster umfasst, der bei Erreichen der gewünschten Nuttiefe T, d.h. dann, wenn sich die Frässcheibe 140 um eine vorgegebene Strecke aus dem Gehäuse 132 herausbewegt hat, den Hubvorgang der Hubeinrichtung 150 automatisch auslöst.

Sobald der Hubvorgang einmal ausgelöst ist, erfolgt der weitere zeitliche Ablauf des Hubvorgangs, d.h. die Bewegung der Frässcheibe 140 nach oben um die Strecke b, die anschließende Bewegung der Frässcheibe 140 nach unten um die Strecke 2b und die abschließende Bewegung der Frässcheibe 140 nach oben um die Strecke b in die Ausgangsstellung, automatisch durch entsprechende Steuerung der Hubeinrichtung mittels einer (nicht dargestellten) Steuerungseinrichtung der Nutfräsvorrichtung 130.

Auf diese Weise kann die Nut 110 mit den Hinterschneidungsabschnitten 114 in einfacher Weise in einem einzigen Arbeitsgang hergestellt werden.

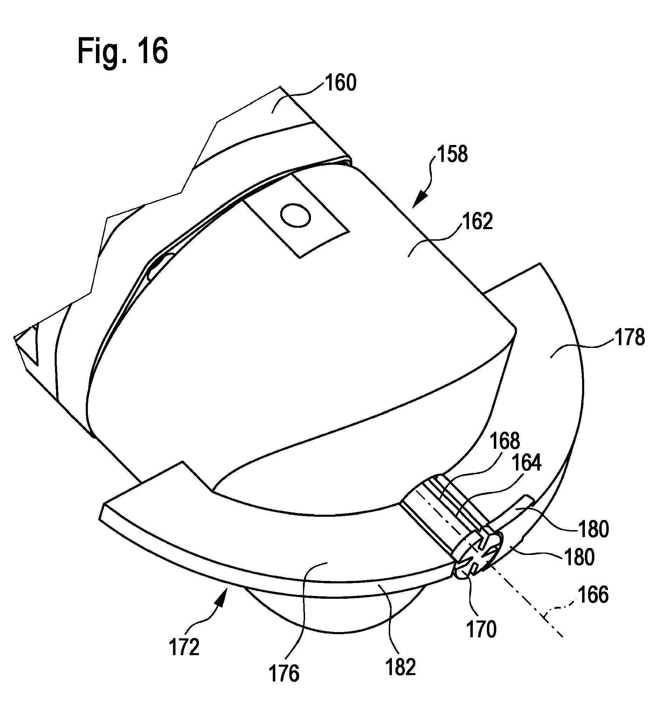

Alternativ zu der in den Fig. 10 und 11 dargestellten Nutfräsvorrichtung 130 kann zur Herstellung der Nuten 110 an den Bauteilen 102 und 104 auch die in Fig. 16 dargestellte Nutfräsvorrichtung 158 verwendet werden.

Diese Nutfräsvorrichtung 158 umfasst eine elektrische Antriebseinheit in einem isolierten Gehäuse 160 und einen daran gehaltenen Maschinenkopf 162 mit einem um eine Rotationsachse 166 drehbaren T-Nuten-Fräser 164.

Der T-Nuten-Fräser 164 umfasst einen Schaftteil 168 mit einem Durchmesser, welcher dem Durchmesser B des Basisabschnitts 112 der zu fräsenden Nut 110 entspricht, und einen Kopfteil 170, dessen Durchmesser der Summe B + 2b der Breiten des Basisabschnitts 112 und der Hinterschneidungsabschnitte 114 entspricht.

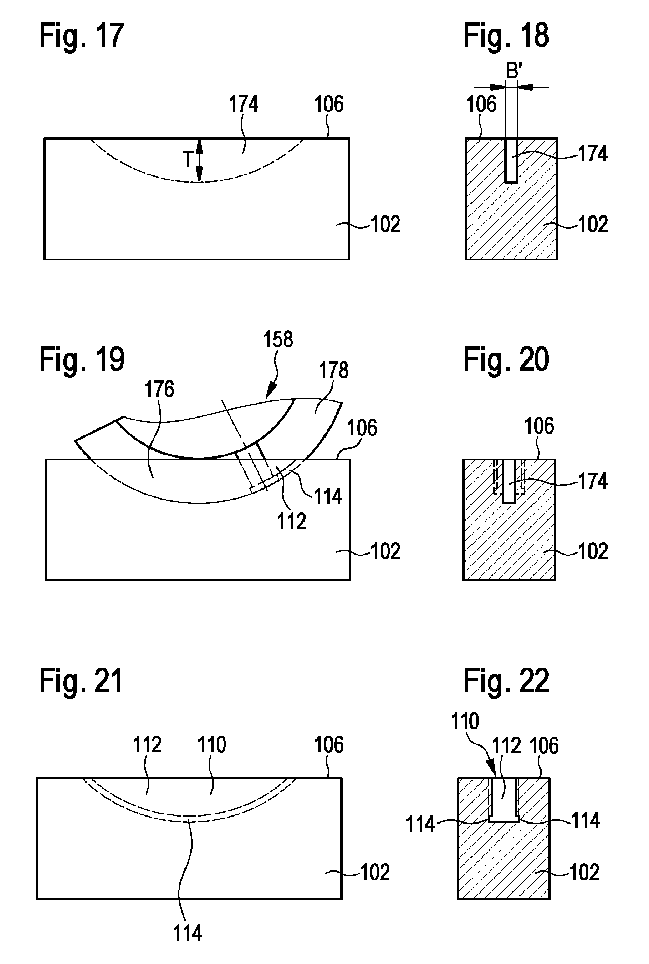

Die Nutfräsvorrichtung 158 umfasst ferner eine Führungseinrichtung 172 zum Führen der Nutfräsvorrichtung 158 in einer vorgefrästen Führungsnut 174 (siehe die Fig. 17 und 18).

Diese Führungseinrichtung 174 umfasst ein viertelkreisscheibenförmiges vorderes Führungselement 174, das in der Bewegungsrichtung der Nutfräsvorrichtung 158 während des Fräsvorgangs vor dem T-Nuten-Fräser 164 angeordnet ist und dessen Dicke im Wesentlichen gleich groß ist wie die Breite B' der vorgefrästen Führungsnut 174.

Ferner umfasst die Führungseinrichtung 172 ein im Wesentlichen viertelkreisscheibenförmiges hinteres Führungselement 178, das in der Bewegungsrichtung der Nutfräsvorrichtung 158 während des Fräsvorgangs hinter dem T-Nuten-Fräser 164 angeordnet ist und dessen Dicke im Wesentlichen der Breite B des Basisabschnitts 112 der zu fräsenden Nut 110 entspricht.

Ferner ist das hintere Führungselement 178 mit zwei Führungszähnen 180 versehen, welche unmittelbar hinter dem Kopfteil 170 des T-Nuten-Fräsers 164 angeordnet sind und sich in der Dickenrichtung des hinteren Führungselements 178 jeweils um die gewünschte Breite b der Hinterschneidungsabschnitte 114 der zu fräsenden Nut 110 nach oben bzw. nach unten erstrecken.

Mit der vorstehend beschriebenen Nutfräsvorrichtung 158 wird die Nut 110 in der Kontaktfläche 106 beispielsweise des ersten Bauteils 102 wie folgt hergestellt:
Zunächst wird mittels einer an sich bekannten und daher hier nicht näher beschriebenen Nutfräsvorrichtung eine kreiszylinderabschnittsförmige Führungsnut 174 erzeugt, deren Nuttiefe T der Nuttiefe der zu erzeugenden Nut 110 entspricht und deren Breite B' kleiner ist als die Breite B des Basisabschnitts 112 der herzustellenden Nut 110 (siehe Fig. 17 und 18).

Insbesondere kann die Breite B' der Führungsnut 174 beispielsweise ungefähr 4 mm betragen.

Anschließend wird die Führungsnut 174 mittels der Nutfräsvorrichtung 158 zu der gewünschten Nut 110 mit den Hinterschneidungsabschnitten 114 erweitert.

Hierzu wird das vordere Führungselement 176 der Führungseinrichtung 172 so weit in die Führungsnut 174 eingetaucht, bis die kreiszylindermantelausschnittsförmige Mantelfläche 182 des vorderen Führungselements 176, welche denselben Krümmungsradius aufweist wie die Führungsnut 174, flächig an der Nutgrundfläche der Führungsnut 174 anliegt und sich der T-Nuten-Fräser 164 noch vor der Kontaktfläche 106 befindet.

Anschließend wird die Nutfräsvorrichtung 158 so geschwenkt, dass die Mantelfläche 182 des vorderen Führungselements 176 an der bogenförmig gekrümmten Nutgrundfläche der Führungsnut 174 entlang gleitet und der T-Nuten-Fräser 164 dadurch in das erste Bauteil 102 eintaucht und sowohl den verbreiterten Basisabschnitt 112 der Nut 110 als auch deren Hinterschneidungsabschnitte 114 fräst (siehe Fig. 19 und 20).

Die an dem hinteren Führungselement 178 angeordneten Führungszähne 180 laufen dabei in den vom T-Nuten-Fräser 164 erzeugten Hinterschneidungsabschnitten 114 der Nut 110 und bewirken dadurch eine zusätzliche Führung der Nutfräsvorrichtung 158.

Die Nutfräsvorrichtung 158 wird entlang der Führungsnut 174 so lange weiter geschwenkt, bis der T-Nuten-Fräser 164 am dem Startpunkt entgegengesetzten Ende der Führungsnut 174 aus dem Bauteil 102 heraustritt und auch die Führungszähne 180 sich nicht mehr im Eingriff mit den Hinterschneidungsabschnitten 114 der erzeugten Nut 110 befinden.

Nunmehr kann die Nutfräsvorrichtung 158 vom Bauteil 102 zurückgezogen werden, und die Nut 110 mit den Hinterschneidungsabschnitten 114 ist fertiggestellt (siehe Fig. 21 und 22).

Nach der Herstellung der Nuten 110 an dem ersten Bauteil 102 und dem zweiten Bauteil 104 wird an dem ersten Bauteil 102 noch die eine Hauptfläche 129 mit dem Basisabschnitt 112 der Nut 110 verbindende Zugangsbohrung 128 hergestellt.

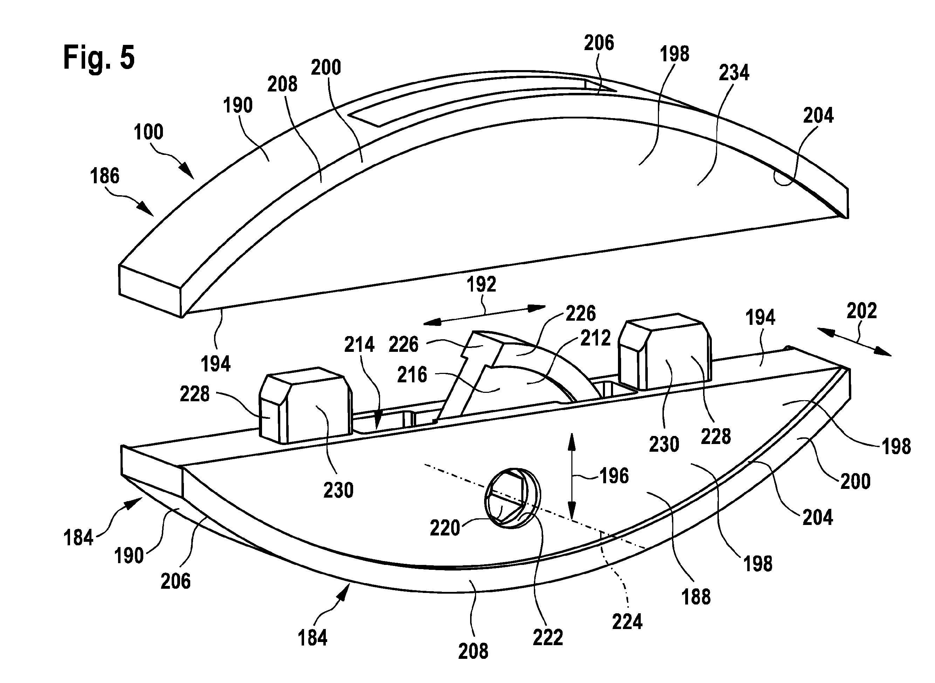

Das die beiden Bauteile 102 und 104 miteinander verbindende Verbindungsmittel 100 umfasst ein erstes Verbindungselement 184 zum Einsetzen in die Nut des ersten Bauteils 102 und ein zweites Verbindungselement 186 zum Einsetzen in die Nut 110 des zweiten Bauteils 104, wie sie in den Fig. 5 bis 7 dargestellt sind.

Das erste Verbindungselement 184 umfasst ein im Wesentlichen kreiszylinderabschnittsförmiges Gehäuse 188 mit einer bogenförmig gekrümmten Anlagefläche 190, die in einem in der Längsrichtung 192 des Verbindungselements 184 genommenen Längsschnitt kreisbogenförmig ist, und eine der gekrümmten Anlagefläche 190 gegenüberliegende ebene Anlegefläche 194 sowie zwei seitliche, im Wesentlichen parallel zu einer Verbindungsrichtung 196 verlaufende Seitenflächen 198.

Vom unteren Rand der Seitenflächen 198 steht jeweils ein bogenförmig gekrümmter Haltevorsprung 200 in einer zur Längsrichtung 192 und zur Verbindungsrichtung 196 senkrechten Dickenrichtung 202 vor.

Jeder Haltevorsprung 200 ist in Richtung zu der Anlegefläche 194 hin durch eine bogenförmig gekrümmte Abstützfläche 204 begrenzt, die in einem längs der Längsrichtung 192 genommenen Längsschnitt kreisbogenförmig ist.

Auf der der Anlegefläche 194 abgewandten Seite ist jeder Haltevorsprung 200 durch eine ebenfalls bogenförmig gekrümmte Anlagefläche begrenzt, welche in einem längs der Längsrichtung 192 genommenen Längsschnitt kreisbogenförmig ist und sich flächenbündig an die Anlagefläche 190 des Gehäuses 188 anschließt.

Die Abstützfläche 204 und die Anlagefläche 206 jedes Haltevorsprungs 200 sind durch eine im Wesentlichen parallel zur Längsrichtung 192 und parallel zur Verbindungsrichtung 196 verlaufende Seitenfläche 208 miteinander verbunden.

Das Profil jedes Haltevorsprungs 200 entspricht im Wesentlichen dem Profil des jeweils zugeordneten Hinterschneidungsabschnitts 114 der Nut 110, und die Krümmung des Haltevorsprungs 200 entspricht der Krümmung des zugeordneten Hinterschneidungsabschnitts 114, so dass das erste Verbindungselement 184 mit seinen Haltevorsprüngen 200 in die Hinterschneidungsabschnitte 114 der Nut 110 einführbar und darin gleitend verschiebbar ist.

Das erste Verbindungselement 184 umfasst ferner eine von dem Gehäuse 188 umgebene Aufnahmekammer 210 zur Aufnahme eines Halteelements 212, das durch eine Mündungsöffnung 214, an welcher die Aufnahmekammer 210 in die Anlegefläche 194 des ersten Verbindungselements 184 mündet, aus der Aufnahmekammer 210 heraustreten kann.

Die Aufnahmekammer 210 kann sich auf ihrer der Anlegefläche 194 abgewandten Seite bis in die gekrümmte Anlagefläche 190 hinein erstrecken.

Das Halteelement 212 umfasst einen plattenförmigen Grundkörper 216, der an einem Ende mit ringförmigen Erhebungen 218 versehen ist, welche eine Aufnahmeöffnung 220 mit polygonalem Querschnitt umgeben, die mit einer im Wesentlichen kreisrunden Durchtrittsöffnung 222 in einer der Seitenflächen 198 des Gehäuses 188 fluchtet.

Die ringförmigen Erhebungen 218 stützen sich an in der Aufnahmekammer 210 angeordneten Wiederlagern ab, so dass das Halteelement 212 um die Mittelachse 224 der Aufnahmeöffnung 220 drehbar an dem Gehäuse 188 gehalten ist.

Das den ringförmigen Erhebungen 218 abgewandte freie Ende des Halteelements 212 ist mit bogenförmigen Vorsprüngen 226 versehen, welche in der Dickenrichtung 202 zu beiden Seiten des Grundkörpers 216 von demselben abstehen.

Ferner umfasst das erste Verbindungselement 184 zu beiden Seiten der Mündungsöffnung 214 der Aufnahmekammer 210 jeweils einen Einsteckvorsprung 228 in Form eines im Wesentlichen quaderförmigen Dübels 230, der sich ausgehend von der Anlegefläche 194 längs der Verbindungsrichtung 196 erstreckt und sich zu seinem der Anlegefläche 194 abgewandten Ende hin verjüngt, um das Einführen in jeweils eine zu dem Dübel 230 komplementäre Aufnahmetasche 232 des zweiten Verbindungselement 186 zu erleichtern.

Dabei passen die Einsteckvorsprünge 228 des ersten Verbindungselements 184 in der Dickenrichtung 202 sehr genau in die Aufnahmetaschen 232 des zweiten Verbindungselements 186, so dass die Einsteckvorsprünge 228 in der Dickenrichtung 202 die Scherkräfte der Verbindung zwischen den Bauteilen 102 und 104 aufnehmen können und auf zusätzliche Dübel, wie es bei den meisten anderen Verbindungsmitteln erforderlich ist, verzichtet werden kann.

In der Längsrichtung 192 hingegen weisen die Aufnahmetaschen 232 eine größere Ausdehnung auf als die Einsteckvorsprünge 228, so dass sich das erste Verbindungselement 184 und das zweite Verbindungselement 186 in der Längsrichtung 192 gegeneinander verschieben lassen, um auf diese Weise einen Toleranzausgleich der Verbindung zwischen den Bauteilen 102 und 104 zu ermöglichen.

Das zweite Verbindungselement 186 umfasst ebenfalls ein im Wesentlichen kreiszylinderabschnittsförmiges Gehäuse 234 mit einer bogenförmig gekrümmten Anlagefläche 190, die in einem längs der Längsrichtung 192 des Verbindungselements 186 genommenen Längsschnitt kreisbogenförmig ist, eine der gekrümmten Anlagefläche 190 gegenüberliegende ebene Anlegefläche 194, Seitenflächen 198 und von den Seitenflächen 198 in der Dickenrichtung 202 vorspringende Haltevorsprünge 200 mit einer zu der Anlegefläche 194 hin gerichteten gekrümmten Abstützfläche 204, einer mit der Anlagefläche 190 bündigen gekrümmten Anlagefläche 206 und einer Seitenfläche 208.

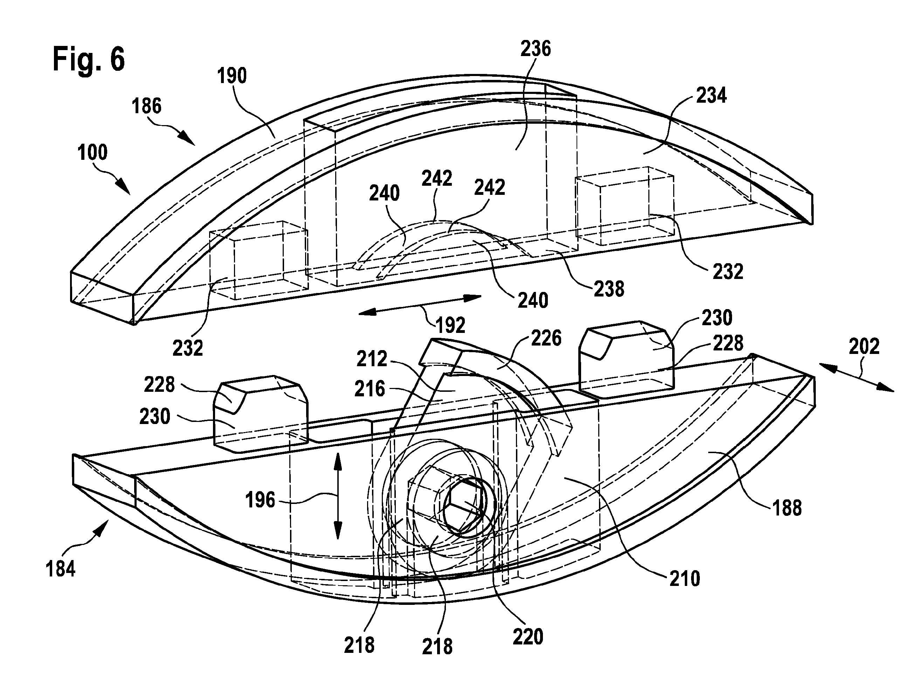

Wie am besten aus Fig. 6 zu ersehen ist, weist das Gehäuse 234 des zweiten Verbindungselements 186 neben den Aufnahmetaschen 232 für die Einsteckvorsprünge 228 des ersten Verbindungselements 184 ferner eine mittig zwischen den Aufnahmetaschen 233 angeordnete Einlaufkammer 236 auf, welche an einer Mündungsöffnung 238 in der Anlegefläche 194 mündet und sich auf der gegenüberliegenden Seite bis in die Anlagefläche 190 hinein erstrecken kann.

Von beiden Seiten der Mündungsöffnung 238 aus springt jeweils ein kreiszylinderabschnittsförmiger Rückhaltevorsprung 240 mit einer bogenförmig gekrümmten Rückhaltefläche 242 in der Dickenrichtung 202 in das Innere der Einlaufkammer 236 vor, so dass zwischen den beiden Rückhaltevorsprüngen 240 ein Spalt verbleibt, dessen Breite geringfügig größer ist als die Dicke des Grundkörpers 216 des Halteelements 212 des ersten Verbindungselements 184.

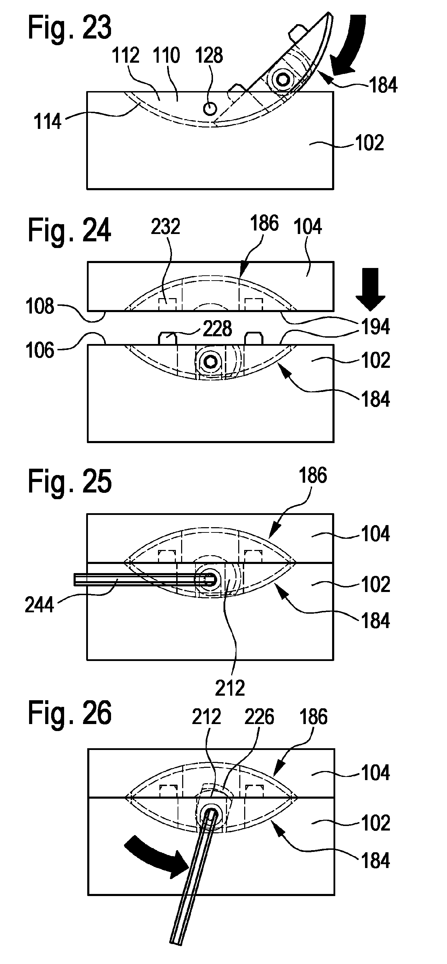

Zur Herstellung der lösbaren Verbindung zwischen dem ersten Bauteil 102 und dem zweiten Bauteil 104 mittels des Verbindungsmittels 100 aus dem ersten Verbindungselement 184 und dem zweiten Verbindungselement 186 wird wie folgt vorgegangen:
Zunächst wird das erste Verbindungselement 184, wie in Fig. 23 dargestellt, so in die Nut 110 des ersten Bauteils 102 eingeschoben, dass die Haltevorsprünge 200 des ersten Verbindungselements 184 in die Hinterschneidungsabschnitte 114 der Nut 110 eingreifen und die Durchtrittsöffnung 222 in der Seitenfläche 198 des Gehäuses 188 mit der Zugangsbohrung 128 in dem ersten Bauteil 102 fluchtet (siehe Fig. 24).

Ebenso wird das zweite Verbindungselement 186 so in die Nut 110 an dem zweiten Bauteil 104 eingeschoben, dass dessen Haltevorsprünge 200 in die Hinterschneidungsabschnitte 114 der Nut 110 eingreifen und das Gehäuse 234 des zweiten Verbindungselements 186 im Wesentlichen vollständig in der Nut 110 aufgenommen ist (siehe Fig. 24).

Das Halteelement 212 des ersten Verbindungselements 184 ist zunächst vollständig in die Aufnahmekammer 210 des ersten Verbindungselements 184 eingeschwenkt (siehe Fig. 24).

In dieser Freigabestellung des Halteelements 212 können die beiden Bauteile 102 und 104 gegeneinander bewegt werden, bis deren Kontaktflächen 106 und 108 sowie die Anlegeflächen 194 der Verbindungselemente 184 und 186 flächig aneinander anliegen und die Einsteckvorsprünge 228 des ersten Verbindungselements 184 in die Aufnahmetaschen 232 des zweiten Verbindungselements 186 eingreifen (siehe Fig. 25).

Nun wird das Betätigungsende eines gewinkelten Mehrkantschlüssels 244 durch die Zugangsbohrung 128 in dem ersten Bauteil 102 und die Durchtrittsöffnung 222 im Gehäuse 188 des ersten Verbindungselements 184 in die Aufnahmeöffnung 220 des Halteelements 212 eingeführt und mit der letzteren in Eingriff gebracht (siehe Fig. 25).

Anschließend wird das Halteelement 212 mittels des Mehrkantschlüssels 244 aus der Aufnahmekammer 210 des ersten Verbindungselements 184 herausgeschwenkt, so dass die bogenförmigen Vorsprünge 226 des Halteelements 212 durch die Mündungsöffnung 238 in die Einlaufkammer 236 des zweiten Verbindungselements 186 gelangen und dabei die Rückhaltevorsprünge 240 hintergreifen.

Die Krümmung der bogenförmigen Vorsprünge 226 des Halteelements 212 einerseits und die Krümmung der Rückhalteflächen 242 der Rückhaltevorsprünge 240 sind dabei so aufeinander abgestimmt, dass die beiden Verbindungselemente 184 und 186 beim Einschwenken des Halteelements 212 in die Einlaufkammer 236 zunehmend längs der Verbindungsrichtung 196 gegeneinander gezogen werden und sich eine möglichst große Kontaktfläche zwischen den Rückhalteflächen 242 und den bogenförmigen Vorsprüngen 226 des Halteelements 212 ergibt.

Dadurch werden Druckspannungsspitzen an den Kontaktflächen zwischen den Rückhaltevorsprüngen 240 und den bogenförmigen Vorsprüngen 226 des Halteelements 212 vermieden, und die Festigkeit des Materials, aus dem das Halteelement 212 und das Gehäuse 234 des zweiten Verbindungselements 186 gefertigt sind, wird möglichst gleichmäßig ausgenutzt.

Das Halteelement 212 und die Gehäuse 188 und 234 der Verbindungselemente 184 bzw. 186 können daher insbesondere aus einem Spritzkunststoff hergestellt sein.

Das Halteelement 212 erfährt bei der Belastung der Verbindung zwischen den Verbindungselementen 184 und 186 längs der Verbindungsrichtung 196 im Wesentlichen nur Zug- und Druckkräfte, aber nur vernachlässigbar kleine Biegemomente.

Die Aufnahmekammer 210 des ersten Verbindungselements 184, die Einlaufkammer 236 des zweiten Verbindungselements 186 und die Außenkonturen der Verbindungselemente 184 und 186 sind so geformt, dass sie einstückig hergestellt werden können.

Das Halteelement 212 kann durch die Mündungsöffnung der Aufnahmekammer 210 an der Anlagefläche 190 des ersten Verbindungselements 184 in die Aufnahmekammer 210 eingeschoben werden, so dass das Gehäuse 188 des ersten Verbindungselements 184 nicht teilbar sein muss.

Es kann daher auf eine Halbschalenbauweise des Gehäuses 188 des ersten Verbindungselements 184 verzichtet werden, was die Festigkeit des ersten Verbindungselements 184 erhöht.

Da die gekrümmten Anlageflächen 190 der Verbindungselemente 184 und 186 denselben Krümmungsradius aufweisen wie die Nutgrundflächen 118 der Nuten 110, an denen die Anlageflächen 190 flächig anliegen und abgleiten können, und da sich die kreisbogenförmigen Haltevorsprünge 200 der Verbindungselemente 184 und 186 mit geringem Kraftaufwand in den jeweils zugeordneten Hinterschneidungsabschnitten 114 der Nuten 110 tangential verschieben lassen und daher die Verbindungselemente 184 und 186 beim Herstellen der Verbindung noch einen Bewegungsfreiheitsgrad besitzen, sind beim Verbinden der Bauteile 102 und 104 noch Korrekturen bezüglich der gegenseitigen Position der Verbindungselemente 184 und 186 möglich.

Dies reduziert die Ansprüche an die Präzision bezüglich der Lage der Nuten 110 an den Bauteilen 102 und 104 deutlich und führt zu einer erheblichen Erleichterung für den Anwender.

Ist das Halteelement 212 aus der in Fig. 25 dargestellten Freigabestellung in die in Fig. 26 dargestellte Haltestellung gebracht, wird durch Zugkräfte, welche auf die Verbindungselemente 184 und 186 in der Verbindungsrichtung 196 wirken, zwischen den Abstützflächen 204 der Haltevorsprünge 200 einerseits und den damit in Kontakt stehenden Hinterschneidungsflächen 122 der Hinterschneidungsabschnitte 114 der Nuten 110 andererseits eine so große Haftreibungskraft erzeugt, dass der vorstehend beschriebene restliche Bewegungsfreiheitsgrad aufgehoben wird und eine völlig feste Verbindung zwischen den Bauteilen 102 und 104 hergestellt wird.

Durch die Abstützung der Haltevorsprünge 200 an den Hinterschneidungsflächen 122 der Hinterschneidungsabschnitte 114 der Nuten 110 in den Bauteilen 102 und 104 sind die Verbindungselemente 184 und 186 somit sicher in dem jeweils zugeordneten Bauteil 102 bzw. 104 verankert.

In der in den Fig. 7 und 26 dargestellten Haltestellung verhindert das Halteelement 212 im Zusammenwirken mit den Rückhaltevorsprüngen 240 eine Relativbewegung des ersten Verbindungselements 184 und des zweiten Verbindungselements 186 längs der Verbindungsrichtung 196.

Um das erste Bauteil 102 und das zweite Bauteil 104 wieder voneinander zu lösen, ist es lediglich erforderlich, wiederum einen Mehrkantschlüssel 244 durch die Zugangsbohrung 128 in dem ersten Bauteil 102 hindurch mit der Aufnahmeöffnung 220 des Halteelements 212 in Eingriff zu bringen und das Halteelement 212 durch Verschwenken in entgegengesetzter Richtung von der Haltestellung in die in Fig. 25 dargestellte Freigabestellung zu bewegen, in welcher die bogenförmigen Vorsprünge 226 des Halteelements 212 die Rückhaltevorsprünge 240 des zweiten Verbindungselements 186 nicht mehr hintergreifen, so dass die Verbindungselemente 184 und 186 ohne weiteres längs der Verbindungsrichtung 196 auseinander bewegt werden können.

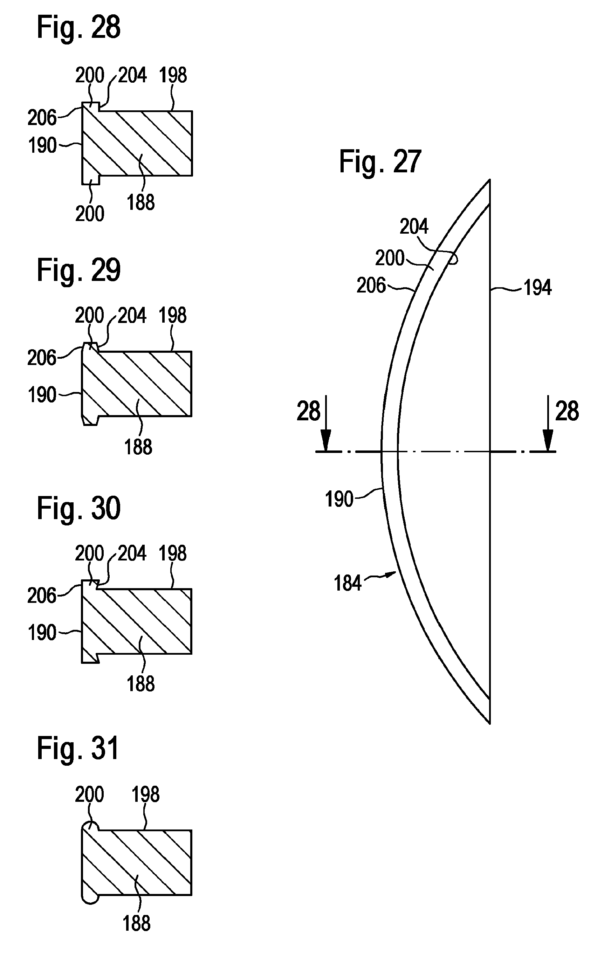

Wie aus den Fig. 27 bis 31 zu ersehen ist, müssen die Profile der Haltevorsprünge 200 keineswegs stets genau rechteckig ausgebildet sein, wie dies in Fig. 28 dargestellt ist.

Vielmehr kann auch vorgesehen sein, dass die Haltevorsprünge 200 ein trapezförmiges Profil aufweisen, welches sich mit wachsendem Abstand von den Seitenflächen 198 des jeweiligen Gehäuses 188 bzw. 234 verjüngt, wie dies in Fig. 29 dargestellt ist.

Alternativ hierzu kann auch vorgesehen sein, dass sich das Profil der Haltevorsprünge 200 mit abnehmendem Abstand von der jeweils zugeordneten Seitenfläche 198 verjüngt, wie dies in Fig. 30 dargestellt ist.

Ferner kann vorgesehen sein, dass das Profil der Haltevorsprünge 200 eine zumindest abschnittsweise gekrümmte Außenkontur, beispielsweise eine halbkreisförmige Außenkontur, aufweist, wie dies in Fig. 31 dargestellt ist.

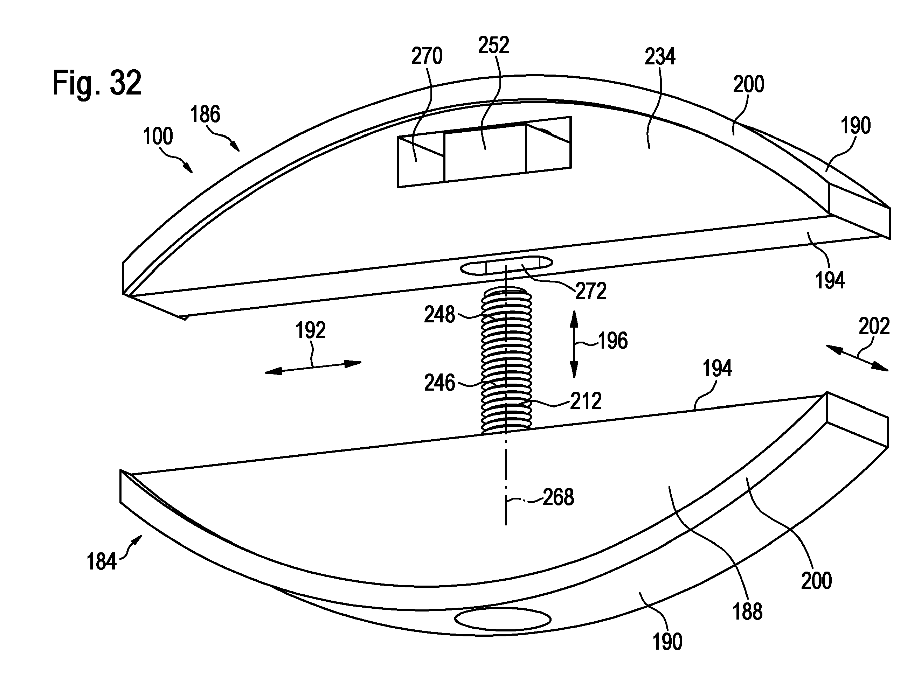

Eine in den Fig. 32 bis 34 dargestellte zweite Ausführungsform eines Verbindungsmittels 100 unterscheidet sich von der vorstehend beschriebenen ersten Ausführungsform dadurch, dass das Halteelement 212 bei der zweiten Ausführungsform als ein Gewindeelement 246 mit einem Außengewinde 248 ausgebildet ist, das zur Verbindung der beiden Bauteile 102, 104 in Eingriff mit einem Innengewinde 250 eines Rückhalteelements 252 des zweiten Verbindungselements 186 gebracht wird.

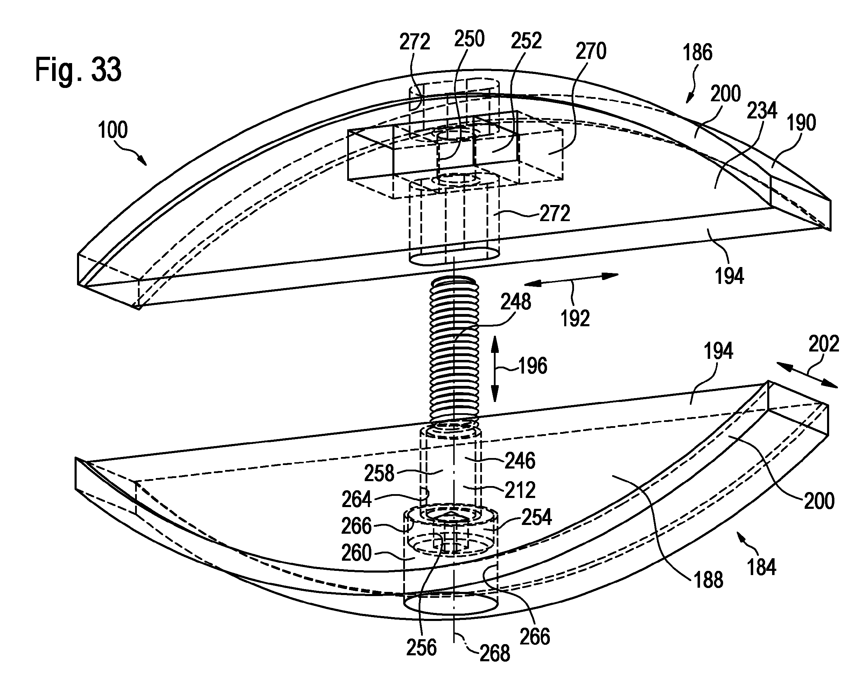

Wie am besten aus Fig. 33 zu ersehen ist, umfasst das Gewindeelement 246 des ersten Verbindungselements 184 außer dem Außengewinde 248 einen zylindrischen Kopfteil 254 mit einer mittigen Aufnahme 256 für einen Betätigungsabschnitt eines (nicht dargestellten) Betätigungselements, beispielsweise eines Mehrkantschlüssels oder eines Schraubendrehers, wobei die Aufnahme 256 einen zu dem Querschnitt des Betätigungsabschnitts komplementären polygonalen Querschnitt aufweist.

Zwischen dem Kopfteil 254 und dem Außengewinde 248 des Gewindeelements 246 ist ein zylindrischer Schaftteil 258 angeordnet, welcher einen geringeren Durchmesser aufweist als der Kopfteil 254.

Der Kopfteil 254 und der Schaftteil 258 sind in einer gestuften Aufnahmekammer 260 des Gehäuses 188 des ersten Verbindungselements 184 angeordnet, welche einen unteren Kammerabschnitt 262 mit größerem Durchmesser und einen oberen Kammerabschnitt 264 mit kleinerem Durchmesser aufweist, wobei die beiden Kammerabschnitte 262, 264 an einer Schulter 266 ineinander übergehen, an welcher sich der Kopfteil 254 des Gewindeelements 246 abstützt.

Der obere Kammerabschnitt 264 erstreckt sich längs der Verbindungsrichtung 196 nach oben und mündet in der Anlegefläche 194 des ersten Verbindungselements 184.

Das als Halteelement 212 dienende Gewindeelement 246 ist somit um eine parallel zur Verbindungsrichtung 196 ausgerichtete Drehachse 268 drehbar an dem ersten Verbindungselement 184 angeordnet.

Das Rückhalteelement 252 des zweiten Verbindungselements 186 weist eine quaderförmige Außenkontur auf und ist in einer ebenfalls quaderförmigen Aufnahmekammer 270 im Gehäuse 234 des zweiten Verbindungselements 186 längs der Längsrichtung 192 verschiebbar und unverdrehbar gehalten.

Die Aufnahmekammer 270 wird von einem Zugangskanal 272 durchsetzt, welcher sich längs der Verbindungsrichtung 196 von der Anlegefläche 194 des zweiten Verbindungselements 186 durch die Aufnahmekammer 270 hindurch bis zur gekrümmten Anlagefläche 190 des zweiten Verbindungselements 186 erstreckt und einen länglichen, insbesondere ovalen, Querschnitt aufweist.

Zur Verbindung des ersten Bauteils 102 und des zweiten Bauteils 104 werden das erste Verbindungselement 184 und das zweite Verbindungselement 186 der zweiten Ausführungsform des Verbindungsmittels 100 in die jeweiligen Nuten 110 des ersten Bauteils 102 bzw. des zweiten Bauteils 104 eingesetzt.

Dann wird das zweite Bauteil 104 mit dem zweiten Verbindungselement 186 so auf das erste Bauteil 102 mit dem ersten Verbindungselement 184 aufgesetzt, dass sich das Außengewinde 248 des Gewindeelements 246 durch den Zugangskanal 272 des zweiten Verbindungselements 186 hindurch bis in die Aufnahmekammer 270 erstreckt und mit dem Innengewinde 250 des Rückhalteelements 252 in Eingriff kommt.

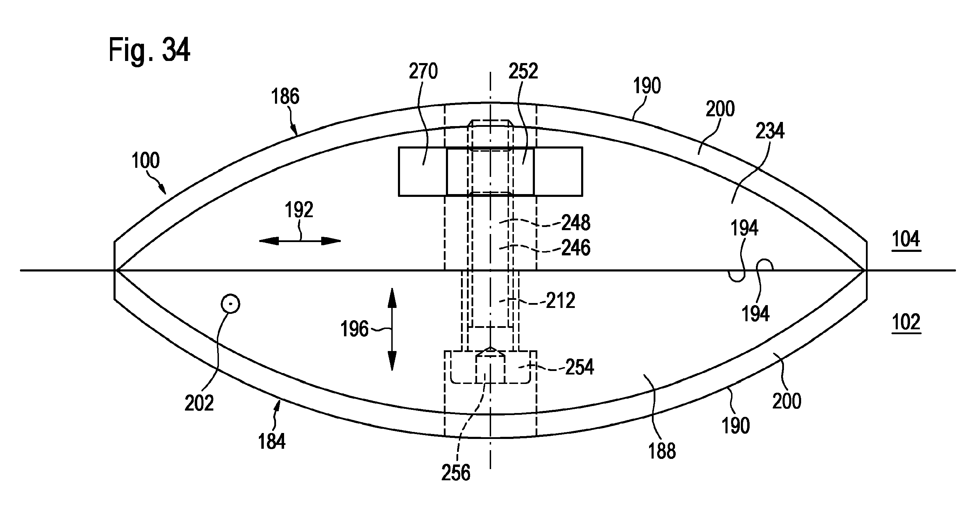

Anschließend wird das Gewindeelement 246 mittels des (nicht dargestellten) Betätigungselements (beispielsweise eines Schraubendrehers), welches durch eine Zugangsbohrung in dem ersten Bauteil 102 hindurch in die Aufnahme 256 am Kopfteil 254 des Gewindeelements 246 eingreift, in Drehung um die Drehachse 268 versetzt, so dass das Außengewinde 248 des Gewindeelements 246 in das Innengewinde 250 des Rückhalteelements 252 eingedreht wird und dadurch das zweite Verbindungselement 186 gegen das erste Verbindungselement 184 gezogen wird, bis der in Fig. 34 dargestellte Zustand erreicht ist, in welchem die beiden Verbindungselemente 184, 186 mit ihren Anlegeflächen 194 flächig aneinander anliegen und das Außengewinde 248 sich über die Aufnahmekammer 270 hinaus bis in den zwischen der Aufnahmekammer 270 und der Anlagefläche 190 des zweiten Verbindungselements 186 liegenden Abschnitt des Zugangskanals 272 erstreckt.

Damit das Betätigungselement in die Aufnahme 256 am Kopfteil 254 des Gewindeelements 246 eingreifen kann, ist die Zugangsbohrung in dem ersten Bauteil 102 bei dieser Ausführungsform koaxial zu der Drehachse 268 des Gewindeelements 246 und somit parallel zur Verbindungsrichtung 196 ausgerichtet.

Die Lösung der beiden Bauteile 102 und 104 voneinander erfolgt bei dieser Ausführungsform dadurch, dass das Außengewinde 248 durch Drehung des Gewindeelements 246 in entgegengesetzter Richtung mittels des (nicht dargestellten) Betätigungselements aus dem Innengewinde 250 des Rückhalteelements 252 herausgedreht wird, bis das Gewindeelement 246 nicht mehr in Eingriff mit dem Rückhalteelement 252 steht und somit das zweite Verbindungselement 186 von dem ersten Verbindungselement 184 abgenommen werden kann.

Durch die Verschiebbarkeit des Rückhalteelements 252 in der Längsrichtung 192 und durch den länglichen Querschnitt des Zugangskanals 272 ist eine gewisse Relativbewegung zwischen dem Gewindeelement 246 und dem Gehäuse 234 des zweiten Verbindungselements 186 bei der Herstellung der Verbindung zwischen dem ersten Bauteil 102 und dem zweiten Bauteil 104 möglich, so dass Lagetoleranzen der Nuten 110 in den Bauteilen 102, 104 hierdurch ausgeglichen werden können.

Die in den Fig. 32 bis 34 dargestellte zweite Ausführungsform des Verbindungsmittels 100 weist keine Einsteckvorsprünge an dem ersten Verbindungselement 184, aber ebenso wie die erste Ausführungsform Haltevorsprünge 200 an den Verbindungselementen 184 und 186 auf.

Im Übrigen stimmt die in den Fig. 32 bis 34 dargestellte zweite Ausführungsform des Verbindungsmittels 100 hinsichtlich Aufbau und Funktion mit der in den Fig. 1 bis 31 dargestellten ersten Ausführungsform überein, auf deren vorstehende Beschreibung insoweit Bezug genommen wird.

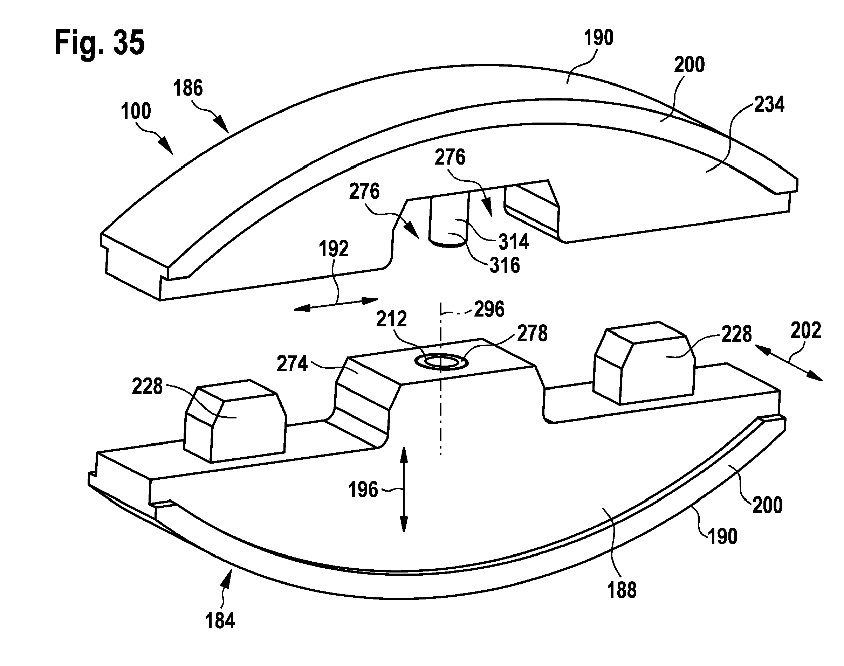

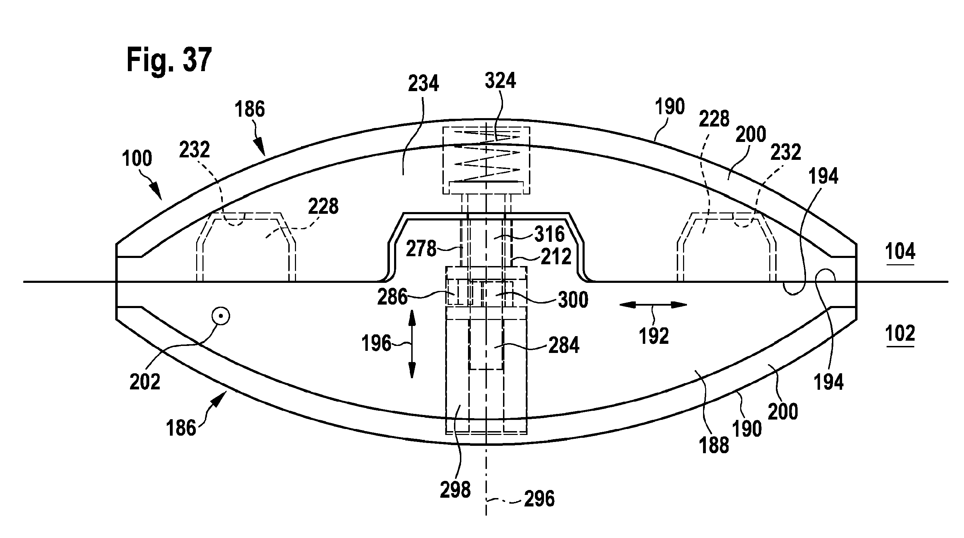

Eine in den Fig. 35 bis 39 dargestellte dritte Ausführungsform des Verbindungsmittels 100 unterscheidet sich von der vorstehend beschriebenen ersten Ausführungsform dadurch, dass das Gehäuse 188 des ersten Verbindungselements 184 eine höckerförmige Erhebung 274 zwischen den beiden Einsteckvorsprüngen 228 aufweist, welche im verbundenen Zustand der Bauteile 102, 104 in eine hierzu komplementär ausgebildete Vertiefung 276 am Gehäuse 234 des zweiten Verbindungselements 186 eingreift (siehe Fig. 37).

Dabei ist zwischen der Erhöhung 274 und der Vertiefung 276 ein Spiel in der Längsrichtung 192 vorhanden, so dass Lagetoleranzen zwischen den Nuten 110 und den Bauteilen 102, 104 ausgeglichen werden können.

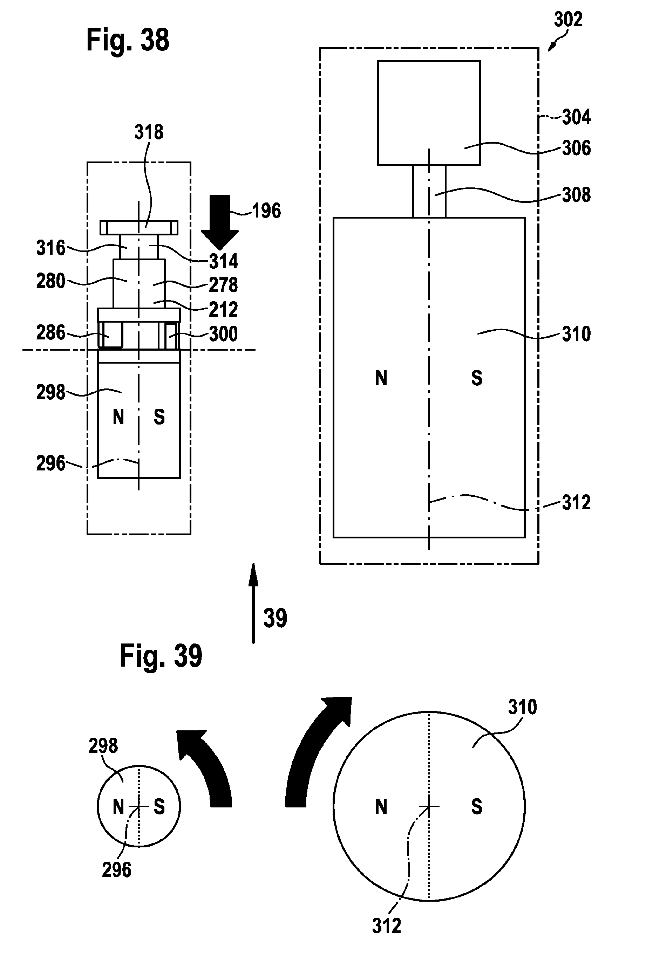

Das Halteelement 212 des ersten Verbindungselements 184 ist bei dieser Ausführungsform als ein Gewindeelement 278 ausgebildet, welches einen hohlzylindrischen Buchsenabschnitt 280 mit einem Innengewinde 282 und einen sich von dem Buchsenabschnitt 280 längs der Verbindungsrichtung 196 nach unten erstreckenden Wellenabschnitt 284, der einen kleineren Durchmesser aufweist als der Buchsenabschnitt 280, sowie ein vom Umfang des Buchsenabschnitts 280 in Axialrichtung nach unten vorstehendes Mitnahmeelement 286 umfasst (siehe insbesondere Fig. 38).

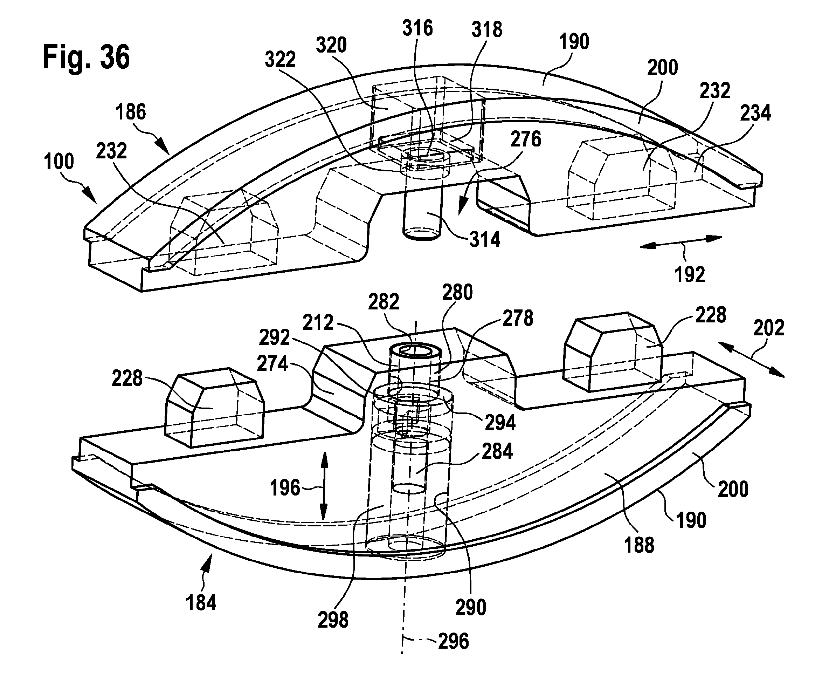

Wie am besten aus Fig. 36 zu ersehen ist, ist das Gewindeelement 278 in einer gestuften Aufnahmekammer 288 des Gehäuses 188 des ersten Verbindungselements 184 angeordnet, welche einen unteren Kammerabschnitt 290 mit größerem Durchmesser und einen oberen Kammerabschnitt 292 mit kleinerem Durchmesser umfasst, die an einer Schulter 294 ineinander übergehen.

Das Gewindeelement 278 ist in der Aufnahmekammer 288 um eine parallel zur Verbindungsrichtung 196 ausgerichtete Drehachse 296 drehbar angeordnet.

Um eine Drehbewegung des Gewindeelements 278 um die Drehachse 296 antreiben zu können, ist in dem unteren Kammerabschnitt 290 der Aufnahmekammer 288 ferner ein hohlzylindrisches, koaxial zu dem Gewindeelement 278 ausgerichtetes Magnetelement 298 vorgesehen, welches teilweise auf den Wellenabschnitt 284 des Gewindeelements 278 aufgeschoben ist und an seiner dem Buchsenabschnitt 280 zugewandten Stirnseite mit einem in Axialrichtung abstehenden Mitnehmerelement 300 versehen ist (siehe insbesondere Fig. 38).

Das Magnetelement 298 besteht aus einem im Wesentlichen senkrecht zu seiner Längsachse und damit senkrecht zur Drehachse 296 magnetisierten Permanentmagnetmaterial (sogenannte diametrale Magnetisierung).

Das diametral magnetisierte Magnetelement 298, das auf dem Wellenabschnitt 284 des Gewindeelements 278 um die Drehachse 268 drehbar gelagert ist, kann mittels eines von außerhalb des Verbindungsmittels 100 auf das Magnetelement 298 einwirkenden, zeitlich veränderlichen externen Antriebsmagnetfeldes zu einer oszillierenden Drehbewegung um die Drehachse 296 angetrieben werden, welche durch Einwirkung des Mitnehmerelements 300 des Magnetelements 298 auf das Mitnahmeelement 286 des Gewindeelements 278 eine gerichtete Drehbewegung des Gewindeelements 278 um die Drehachse 296 erzeugt.

Hierzu wird ein in den Fig. 38 und 39 schematisch dargestelltes Antriebsgerät 302 verwendet, das ein Gehäuse 304, beispielsweise aus einem Kunststoffmaterial, einen in dem Gehäuse 304 angeordneten Elektromotor 306 mit einer Antriebswelle 308 und einen drehfest mit der Antriebswelle 308 verbundenen Antriebsmagneten 310 umfasst.

Der Antriebsmagnet 310 ist als ein im Wesentlichen senkrecht zur Längsrichtung 312 der Antriebswelle 308 magnetisierter zylindrischer Hochleistungs-Permanentmagnet ausgebildet (sogenannte diametrale Magnetisierung).

Zum Erzeugen einer Drehbewegung des Gewindeelements 278 wird nun wie folgt vorgegangen:
Das Antriebsgerät 302 wird relativ zu dem ersten Verbindungselement 184 in eine Stellung gebracht, in der die Längsrichtung 312 der Antriebswelle 308 des Antriebsgeräts 302 und die Drehachse 296 des Gewindeelements 278 parallel zueinander ausgerichtet sind und der Abstand zwischen dem Antriebsmagneten 310 und dem Magnetelement 298 möglichst gering ist, um eine möglichst starke Wechselwirkung der Magnete miteinander zu erhalten. Die Lage des Antriebsgeräts 302 und des Magnetelements 298 in dieser Stellung sind in den Fig. 38 und 39 schematisch dargestellt.

Wird nun der Elektromotor 306 des Antriebsgeräts 302 so betrieben, dass sich die Antriebswelle 308 und damit der Antriebsmagnet 310 (bei Betrachtung längs der in Fig. 38 durch den Pfeil 39 angezeigten Blickrichtung) beispielsweise im Uhrzeigersinn dreht, so rotieren dabei aufgrund der diametralen Magnetisierung des Antriebsmagneten 310 der Nordpol (N) und der Südpol (S) des Antriebsmagneten 310 im Uhrzeigersinn, wie dies in der schematischen Darstellung der Fig. 39 zu sehen ist.

Die Drehbewegung des Antriebsmagneten 310 erzeugt somit ein rotierendes und damit zeitlich variierendes Antriebsmagnetfeld.

Damit dieses Antriebsmagnetfeld in den Innenraum des ersten Verbindungselements 184 eindringen und mit dem Magnetelement 298 wechselwirken kann, besteht das Gehäuse 188 des ersten Verbindungselements 184 aus einem nicht-ferromagnetischen Material, beispielsweise aus einem Kunststoffmaterial.

Da sich ungleichnamige Pole des Magnetelements 298 und des Antriebsmagneten 310 anziehen und gleichnamige Pole dieser Elemente einander abstoßen, dreht sich das Magnetelement 298 in der Aufnahmekammer 288 aufgrund der Wechselwirkung mit dem Antriebsmagneten 310 mit entgegengesetzter Drehrichtung, d.h. (in der Blickrichtung des Pfeiles 39 in Fig. 38 betrachtet) im Gegenuhrzeigersinn.

Durch diese Drehbewegung kommt das Mitnehmerelement 300 des Magnetelements 298 in Anlage mit dem Mitnahmeelement 286 des Gewindeelements 278, so dass das Gewindeelement 278 durch das Magnetelement 298 zu einer Drehbewegung um die Drehachse 296 mit derselben Drehrichtung wie das Magnetelement 298 angetrieben wird.

Das Magnetelement 298 und das von diesen mitgenommen Gewindeelement 278 folgen der Drehbewegung des Antriebsmagneten 310 so lange, bis der auf das Gewindeelement 278 wirkende Widerstand (der beispielsweise deshalb wirkt, weil das Innengewinde 282 des Gewindeelements 278 auf ein komplementäres Außengewinde 314 eines an dem zweiten Verbindungselement 186 vorgesehenen Rückhalteelements 316 aufgedreht wird) so groß wird, dass das Drehmoment, das von dem durch den Antriebsmagneten 310 erzeugten rotierenden Magnetfeld übertragen wird, nicht mehr ausreicht, das Gewindeelement 278 weiterzudrehen. Ist ein solcher Blockadepunkt erreicht, so bleiben das Gewindeelement 278 und das Magnetelement 298 in der erreichten Stellung stehen, während sich der Antriebsmagnet 310 weiterdreht.

Wenn sich der Antriebsmagnet 310 um ungefähr 180° weitergedreht hat, so dass nunmehr gleichnamige Pole des Antriebsmagneten 310 und des Magnetelements 298 einander direkt gegenüberstehen, setzt sich das Magnetelement 298 in einem Umklappvorgang wieder in Bewegung, und zwar in zu der Drehrichtung des Antriebsmagneten 310 gleichsinniger Drehrichtung, bis sich wieder ungleichnamige Pole des Antriebsmagneten 310 und des Magnetelements 298 gegenüberstehen.

Ist dieser Zustand erreicht, so dreht sich die Drehrichtung des Magnetelements 298 abermals um, und das Magnetelement 298 dreht sich wieder gegensinnig zu dem Antriebsmagneten 310, wie in der Phase vor Eintreten der Blockade des Gewindeelements 278.

Das Magnetelement 298 wird nun über ungefähr eine halbe Umdrehung hinweg von dem rotierenden Magnetfeld des Antriebsmagneten 310 beschleunigt, bis das Mitnehmerelement 300 erneut an dem Mitnahmeelement 286 des Gewindeelements 278 anschlägt und der Impuls des Magnetelements 298 schlagartig auf das Mitnahmeelement 286 und damit das Gewindeelement 278 übertragen wird. Durch diesen großen Impulsübertrag kann das Gewindeelement 278 sich aus seiner Blockadestellung lösen und um einen gewissen Winkel in eine Stellung weiterdrehen, in der eine erneute Blockade des Gewindeelements 278 eintritt. In dieser neuen Blockadestellung bleibt auch das Magnetelement 298 wieder stehen, ohne dem Antriebsmagneten 310 weiter folgen zu können, bis sich wieder gleichnamige Pole des Magnetelements 298 und des Antriebsmagneten 310 unmittelbar gegenüberstehen und ein erneuter Umklappvorgang des Magnetelements 298 eine erneute Impulsaufnahme ermöglicht.

Auf diese sich periodisch wiederholende Weise wird das Gewindeelement 278 von Blockadestellung zu Blockadestellung weitergedreht. Das wiederholte Schwungholen und Anlaufen des Mitnehmerelements 300 gegen das Mitnahmeelement 286 erzeugt einen Schlaghammereffekt, der die Drehbewegung des Gewindeelements 278 um die Drehachse 296 gegen einen Widerstand stark beschleunigt.

Weitere Einzelheiten zum Antreiben einer Drehbewegung des Gewindeelements 278 mittels eines externen Antriebsmagneten 310 sind der DE 198 07 663 A1 zu entnehmen, auf welche diesbezüglich verwiesen und welche hiermit zum Bestandteil der vorliegenden Beschreibung gemacht wird.

Durch die so erzeugte Drehbewegung des Gewindeelements 278 kann das Innengewinde 282 des Gewindeelements 278 mit dem Außengewinde 314 des an dem zweiten Verbindungselement 186 vorgesehenen Rückhalteelements 316 verschraubt oder (bei Umkehrung der Drehrichtung des Antriebsmagneten 310) von dem Außengewinde 314 gelöst werden.

Das Rückhalteelement 316 umfasst bei dieser Ausführungsform einen Vierkantkopf 318, der mit einem gewissen Spiel in einer quaderförmigen Aufnahmekammer 320 innerhalb des Gehäuses 234 des zweiten Verbindungselements 186 geführt und somit gegen eine Verdrehung um die Verbindungsrichtung 196 gesichert ist.

Von der Unterseite des Vierkantkopfes 318 aus erstreckt sich das Außengewinde 314 des Rückhalteelements 316 durch einen parallel zur Verbindungsrichtung 196 verlaufenden Zugangskanal 322 in die Vertiefung 276 des zweiten Verbindungselements 186 hinein, so dass dieses Außengewinde 314 dem Innengewinde 282 des Gewindeelements 278 an dem ersten Verbindungselement 184 gegenübersteht (siehe Fig. 35 und 36).

Wie aus Fig. 37 zu ersehen ist, ist in der Aufnahmekammer 320 ferner eine Druckschraubenfeder 324 vorgesehen, welche das Rückhalteelement 316 längs der Verbindungsrichtung 196 zu dem ersten Verbindungselement 184 hin vorspannt.

Zur Herstellung der Verbindung zwischen dem ersten Bauteil 102 und dem zweiten Bauteil 104 mittels der dritten Ausführungsform des Verbindungsmittels 100 wird wie folgt vorgegangen:
Nachdem das erste Verbindungselement 184 und das zweite Verbindungselement 186 in die jeweiligen Nuten 110 des ersten Bauteils 102 bzw. des zweiten Bauteils 104 eingesetzt worden sind, wird das zweite Bauteil 104 mit dem zweiten Verbindungselement 186 so gegen das erste Bauteil 102 mit dem ersten Verbindungselement 184 bewegt, dass das Innengewinde 282 des Gewindeelements 278 in Eingriff mit dem Außengewinde 314 des Rückhalteelements 316 kommt.

Dabei tauchen auch die Einsteckvorsprünge 228 in die hierzu komplementären Aufnahmetaschen 232 des zweiten Verbindungselements 186 und die höckerförmige Erhöhung 274 des ersten Verbindungselement 184 in die hierzu komplementäre Vertiefung 276 des zweiten Verbindungselements 186 ein.

Anschließend wird das Gewindeelement 278 mittels des Antriebsgeräts 302 in der vorstehend beschriebenen Weise in eine solche Drehbewegung um die Drehachse 296 versetzt, dass der Buchsenabschnitt 280 des Gewindeelements 278 mit dem Innengewinde 282 und das Rückhalteelement 316 mit dem Außengewinde 314 miteinander verschraubt werden, so dass das zweite Verbindungselement 186 gegen das erste Verbindungselement 184 gezogen wird und die Verbindung zwischen den Bauteilen 102 und 104 hergestellt ist.

Zum Lösen der Verbindung zwischen den Bauteilen 102 und 104 wird die Verschraubung zwischen dem Gewindeelement 278 und dem Rückhalteelement 316 gelöst, indem das Antriebsgerät 302 mit entgegengesetzter Drehrichtung des Antriebsmagneten 310 verwendet wird.

Im Übrigen stimmt die in den Fig. 35 bis 39 dargestellte dritte Ausführungsform des Verbindungsmittels 100 hinsichtlich Aufbau und Funktion mit der in den Fig. 1 bis 31 dargestellten ersten Ausführungsform überein, auf deren vorstehende Beschreibung insoweit Bezug genommen wird.

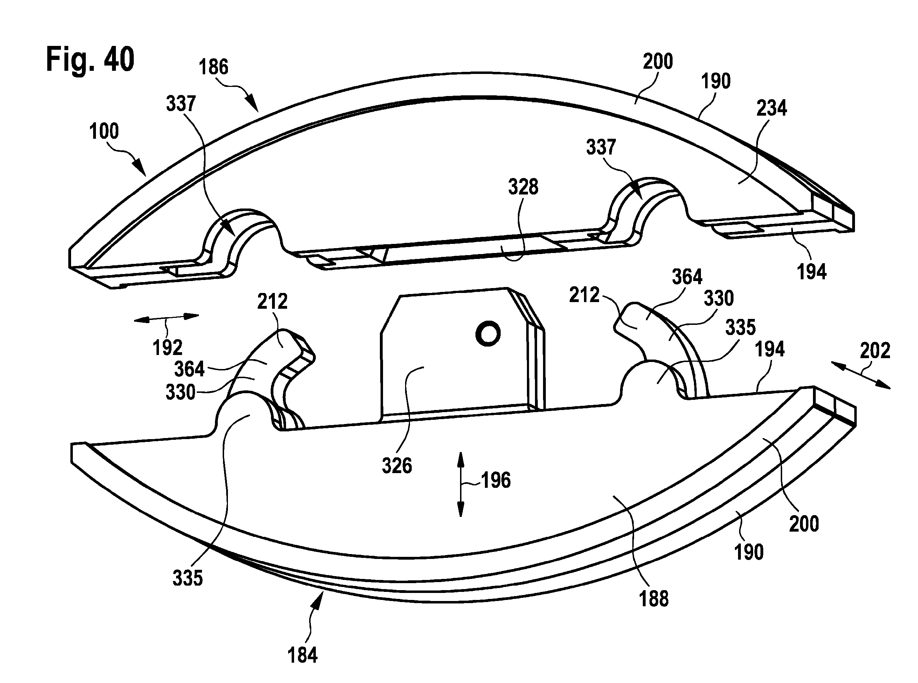

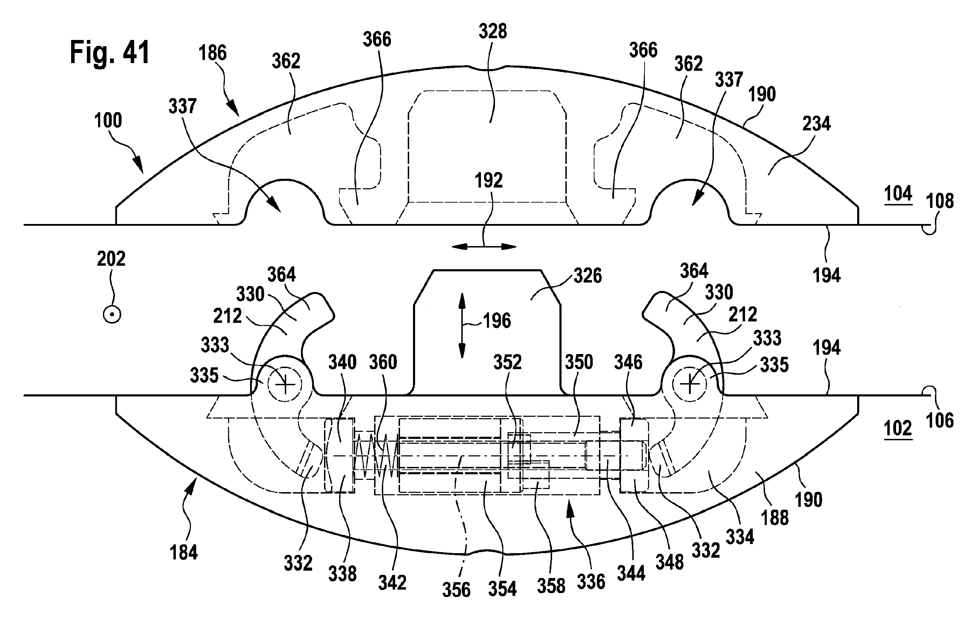

Eine in den Fig. 40 bis 45 dargestellte vierte Ausführungsform des Verbindungsmittels 100 unterscheidet sich von der in den Fig. 1 bis 31 dargestellten Ausführungsform dadurch, dass an dem ersten Verbindungselement 184 statt zweier Einsteckvorsprünge 228 ein einzelner mittiger Einsteckvorsprung 326 vorgesehen ist, der im verbundenen Zustand der Bauteile 102, 104 in eine hierzu komplementäre Aufnahmetasche 328 an dem zweiten Verbindungselement 186 eingreift.

Ferner umfasst das erste Verbindungselement 184 bei dieser Ausführungsform nicht ein einzelnes Halteelement 212, sondern zwei schwenkbar am Gehäuse 188 des ersten Verbindungselements 184 gehaltene Halteelemente 212 in Form von Klapphebeln 330, von denen jeweils einer zu beiden Seiten des mittigen Einsteckvorsprungs 326 angeordnet ist.

Die inneren Endbereiche 332 der um Schwenkachsen 333 an Lagervorsprüngen 335 schwenkbar gelagerten Klapphebel 330 greifen in eine Aufnahmekammer 334 innerhalb des Gehäuses 188 ein und werden durch einen Spreizmechanismus 336 auf Abstand voneinander gehalten.

Der Spreizmechanismus 336 umfasst ein erstes Spreizelement 338 mit einem Vierkantkopf 340, einem sich von dem Vierkantkopf 340 in der Längsrichtung 192 erstreckenden Schaftabschnitt 342 und einem sich an den Schaftabschnitt 342 anschließenden Gewindeabschnitt 344 mit einem Außengewinde.

Ferner umfasst der Spreizmechanismus 336 ein zweites Spreizelement 346 mit einem zylindrischen Kopfabschnitt 348 und einem sich von dem Kopfabschnitt 348 aus in der Längsrichtung 192 koaxial zu dem Schaftabschnitt 342 des ersten Spreizelements 338 erstreckenden hohlzylindrischen Buchsenabschnitt 350, der mit einem Innengewinde versehen ist.

Das Innengewinde des Buchsenabschnitts 350 des zweiten Spreizelements 346 steht dabei in Eingriff mit dem Außengewinde des Gewindeabschnitts 344 des ersten Spreizelements 338.

Ferner ist der Buchsenabschnitt 350 an seinem dem Vierkantkopf 340 des ersten Spreizelements 338 zugewandten Ende mit einem in radialer Richtung abstehenden Mitnahmeelement 352 versehen.

Zwischen dem Vierkantkopf 340 des ersten Spreizelements 338 und dem Buchsenabschnitt 350 des zweiten Spreizelements 346 ist ein hohlzylindrisches Magnetelement 354 mit diametraler Magnetisierung um die gemeinsame Längsachse 356 der beiden Spreizelemente 338 und 346 drehbar auf dem Schaftabschnitt 342 des ersten Spreizelements 338 angeordnet.

An seiner dem Buchsenabschnitt 350 des zweiten Spreizelements 346 zugewandten Stirnseite ist das Magnetelement 354 mit einem in axialer Richtung vorstehenden Mitnehmerelement 358 versehen, welches auf das Mitnahmeelement 352 an dem Buchsenabschnitt 350 einwirken kann.

Zwischen dem Vierkantkopf 340 des ersten Spreizelements 338 und der demselben zugewandten Stirnseite des Magnetelements 354 ist eine Druckschraubenfeder 360 angeordnet, welche das Magnetelement 354 gegen den Buchsenabschnitt 350 des zweiten Spreizelements 346 vorspannt.

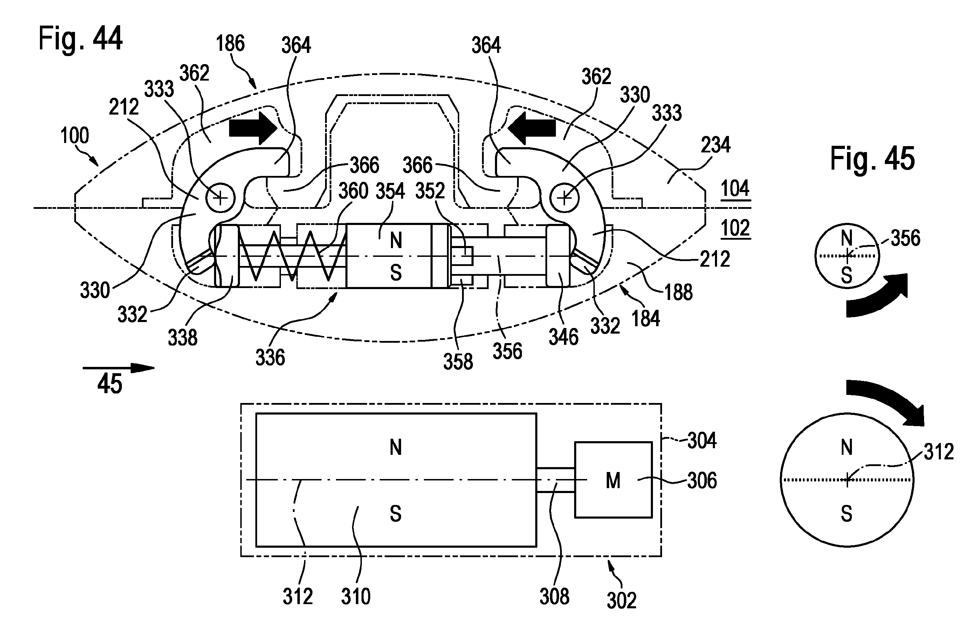

Wie am besten aus den Fig. 44 und 45 zu ersehen ist, ist das zweite Spreizelement 346 des Spreizmechanismus 336 ebenso wie das Gewindeelement 278 der vorstehend beschriebenen dritten Ausführungsform des Verbindungsmittels 100 mittels eines Antriebsgeräts 302 mit rotierendem Antriebsmagneten 310, der mit dem Magnetelement 354 wechselwirkt, zu einer Drehbewegung um die Längsachse 356 relativ zu dem ersten Spreizelement 338, welches durch seinen Vierkantkopf 340 in einer konstanten Drehposition gehalten wird, antreibbar.

Dazu wird das Antriebsgerät 302, wie in den Fig. 44 und 45 dargestellt, außerhalb des Verbindungsmittels 100 so ausgerichtet, dass die Längsrichtung 312 der Antriebswelle 308 im Wesentlichen parallel zu der Längsachse 356 der Spreizelemente 338, 346 ausgerichtet ist und der Abstand zwischen dem Antriebsmagneten 310 und dem Magnetelement 354 möglichst gering ist.

In dem Gehäuse 234 des zweiten Verbindungselements 186 sind zwei Einlaufkammern 362 vorgesehen, in welche die äußeren Endbereiche 364 der Klapphebel 330 eintauchen können, wenn die Verbindungselemente 184 und 186 mit ihren Anlegeflächen 194 aneinander anliegen.

Ferner sind an dem Gehäuse 234 Ausnehmungen 357 zur Aufnahme der von dem Gehäuse 188 abstehenden Lagervorsprünge 335 vorgesehen.

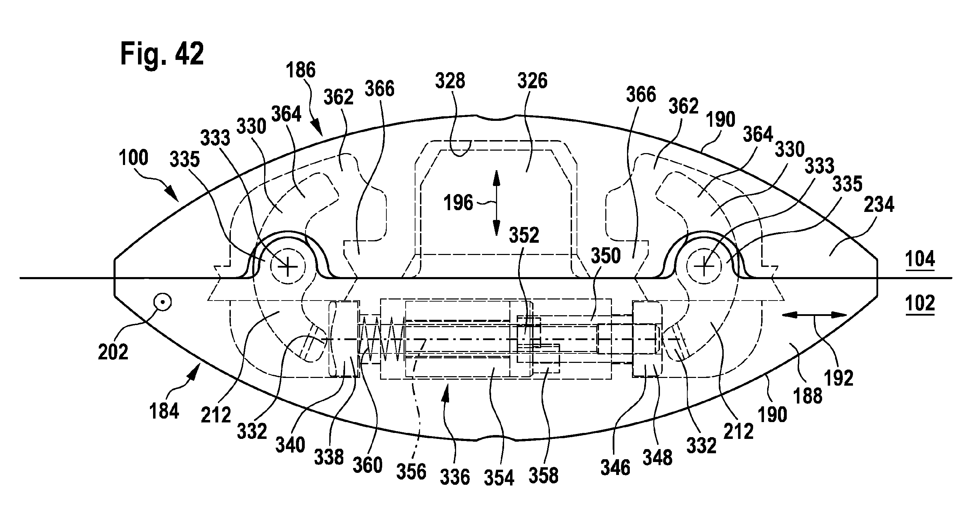

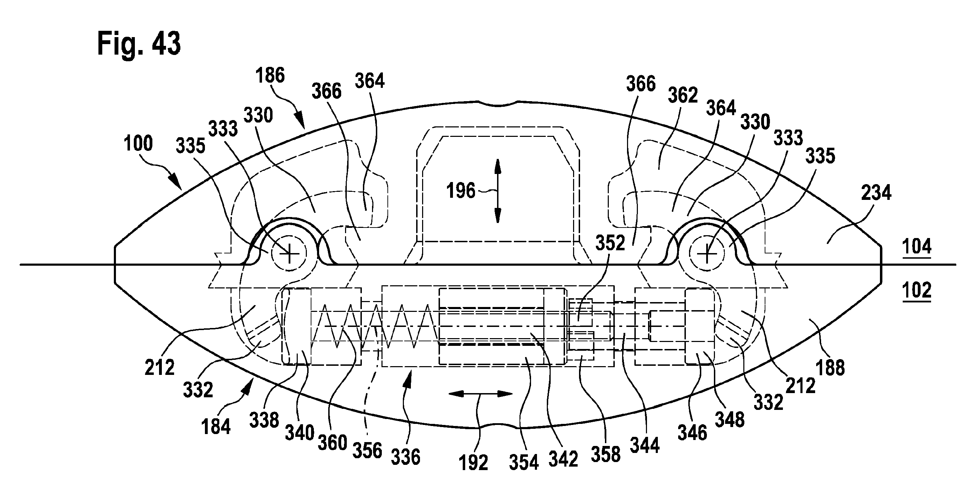

Die Einlaufkammern 362 sind an ihren dem ersten Verbindungselement 184 zugewandten Rändern abschnittsweise durch jeweils einen Rückhaltevorsprung 366 begrenzt, welcher vom jeweils zugeordneten Klapphebel 330 hintergriffen werden kann, wenn der betreffende Klapphebel 330 um seine Schwenkachse 333 aus der in Fig. 42 dargestellten Freigabestellung in die in Fig. 43 dargestellte Haltestellung verschwenkt wird.

Eine solche Verschwenkung kann mittels des vorstehend beschriebenen Spreizmechanismus 336 erfolgen.

Die Gehäuse 188 und 234 des ersten Verbindungselements 184 beziehungsweise des zweiten Verbindungselements 186 sind bei dieser Ausführungsform vorzugsweise zweiteilig ausgebildet, wobei die beiden Teile längs der Längsmittelebene des jeweiligen Gehäuses aneinander anliegen.

Zum Herstellen einer Verbindung zwischen dem ersten Bauteil 102 und dem zweiten Bauteil 104 mittels der vierten Ausführungsform des Verbindungsmittels 100 wird wie folgt vorgegangen:
Das erste Verbindungselement 184 und das zweite Verbindungselement 186 werden in die jeweilige Nut 110 an dem ersten Bauteil 102 bzw. an dem zweiten Bauteil 104 eingesetzt.

Anschließend wird das zweite Bauteil 104 mit dem zweiten Verbindungselement 186 so auf das erste Bauteil 102 mit dem ersten Verbindungselement 184 aufgesetzt, dass die sich in der Freigabestellung befindlichen Klapphebel 330 mit ihren äußeren Endbereichen 364 in die Einlaufkammern 362 des zweiten Verbindungselements 186 und der mittige Einsteckvorsprung 326 des ersten Verbindungselements 184 in die Aufnahmetasche 328 des zweiten Verbindungselements 186 eintauchen.

Anschließend wird mittels des Antriebsgeräts 302 das zweite Spreizelement 346 zu einer solchen Drehbewegung um die Längsachse 356 angetrieben, dass sich der Kopfabschnitt 348 des zweiten Spreizelements 346 von dem Vierkantkopf 340 des ersten Spreizelements 338 entfernt und somit die Gesamtlänge des Spreizmechanismus 336 zunimmt, wodurch die inneren Endbereiche 332 der Klapphebel 330 auseinander bewegt werden, die Klapphebel 330 um ihre Schwenkachsen 333 verschwenkt werden und dadurch in die in Fig. 43 dargestellte Haltestellung bewegt werden, in welcher die äußeren Endbereiche 364 der Klapphebel 330 die jeweils zugeordneten Rückhaltevorsprünge 366 des zweiten Verbindungselements 186 hintergreifen und an denselben anliegen, so dass das zweite Verbindungselement 186 an dem ersten Verbindungselement 184 verriegelt ist und die Verbindungselemente 184, 186 nicht mehr längs der Verbindungsrichtung 196 auseinander bewegt werden können.

Um die Verbindung der Bauteile 102, 104 zu lösen, wird das zweite Spreizelement 346 mittels des Antriebsgeräts 302 in umgekehrter Drehrichtung relativ zu dem ersten Spreizelement 338 um die Längsachse 356 gedreht, so dass der Kopfabschnitt 348 des zweiten Spreizelements 346 auf den Vierkantkopf 340 des ersten Spreizelements 338 zu bewegt wird und die Gesamtlänge des Spreizmechanismus 336 sich verkürzt.

Die inneren Endbereiche 332 der Klapphebel 330 liegen daraufhin nicht mehr an dem Vierkantkopf 340 des ersten Spreizelements 338 bzw. an dem Kopfabschnitt 348 des zweiten Spreizelement 346 an, so dass der Spreizmechanismus 336 einer Schwenkbewegung der Klapphebel 330 von der in Fig. 43 dargestellten Haltestellung in die in Fig. 42 dargestellte Freigabestellung keinen Widerstand mehr entgegensetzt.

Nach dieser Entriegelung der Klapphebel 330 kann somit das zweite Verbindungselement 186 längs der Verbindungsrichtung 196 von dem ersten Verbindungselement 184 abgenommen werden.

Im Übrigen stimmt die in den Fig. 40 bis 45 dargestellte vierte Ausführungsform des Verbindungsmittels 100 hinsichtlich Aufbau und Funktion mit der in den Fig. 1 bis 31 dargestellten ersten Ausführungsform überein, auf deren vorstehende Beschreibung insoweit Bezug genommen wird.

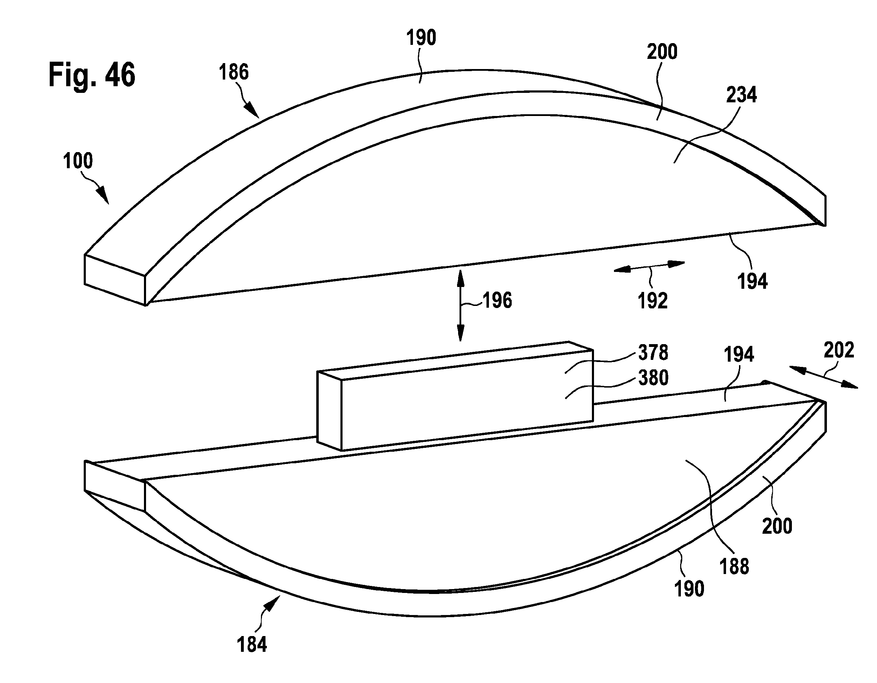

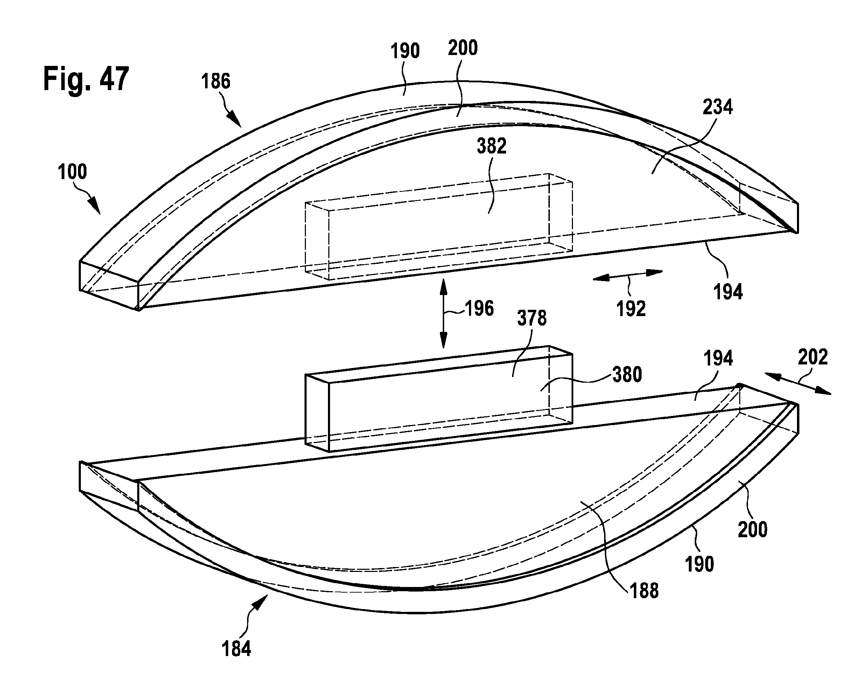

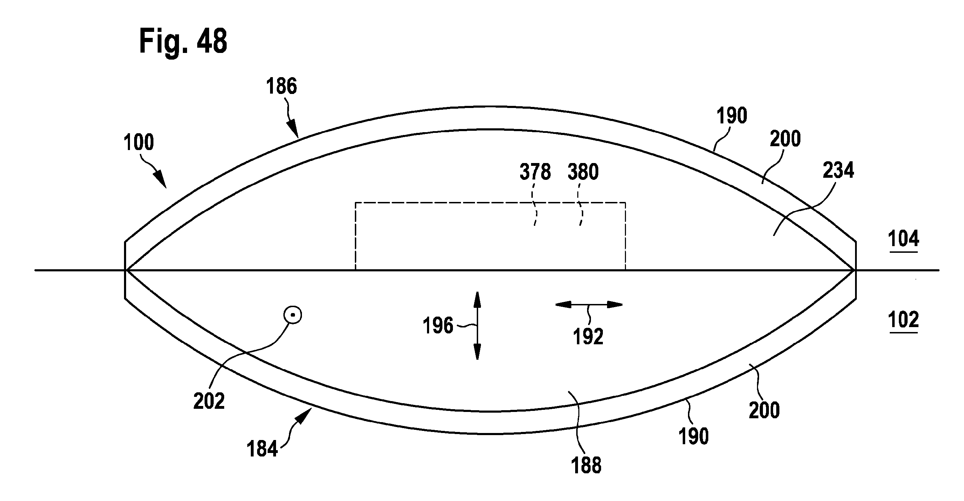

Eine in den Fig. 46 bis 48 dargestellte fünfte Ausführungsform des Verbindungsmittels 100 unterscheidet sich von der in den Fig. 1 bis 31 dargestellten ersten Ausführungsform dadurch, dass kein verschwenkbares Halteelement vorgesehen ist und dass an dem ersten Verbindungselement 184 statt der beiden Einsteckvorsprünge 228 ein einziger mittiger Einsteckvorsprung 378 in Form eines im Wesentlichen quaderförmigen Blockdübels 380 vorgesehen ist, welcher von der Anlegefläche 194 nach oben vorsteht. Im verbundenen Zustand der beiden Bauteile 102 und 104 taucht der Einsteckvorsprung 378 in eine komplementär hierzu ausgebildete, im Wesentlichen quaderförmige Aufnahmetasche 382 ein, welche im Gehäuse 234 des zweiten Verbindungselements 186 ausgebildet ist.

Zur Herstellung der Verbindung zwischen den Bauteilen 102 und 104 mittels der fünften Ausführungsform des Verbindungsmittels 100 wird wie folgt vorgegangen:
Das erste Verbindungselement 184 und das zweite Verbindungselement 186 werden in die jeweiligen Nuten 110 am ersten Bauteil 102 bzw. am zweiten Bauteil 104 eingesetzt.

Anschließend werden die Anlegefläche 194 und der Einsteckvorsprung 378 des ersten Verbindungselements 184 und/oder die Anlegefläche 194 und die Begrenzungsflächen der Aufnahmetasche 382 des zweiten Verbindungselements 186 mit einem geeigneten Klebstoff versehen.

Anschließend wird das zweite Bauteil 104 mit dem zweiten Verbindungselement 186 so gegen das erste Bauteil 102 mit dem ersten Verbindungselement 184 bewegt, dass der Einsteckvorsprung 378 des ersten Verbindungselements 184 in die Aufnahmetasche 382 des zweiten Verbindungselements 186 eintaucht und beide Verbindungselemente 184, 186 mit ihren Anlegeflächen 194 flächig aneinander anliegen.

In dieser Stellung werden die Bauteile 102, 104 gehalten, bis der Klebstoff ausgehärtet und somit eine stoffschlüssige Verbindung zwischen dem ersten Verbindungselement 184 und dem zweiten Verbindungselement 186 und dadurch auch zwischen dem ersten Bauteil 102 und dem zweiten Bauteil 104 hergestellt ist.

Im übrigen stimmt die in den Fig. 46 bis 48 dargestellte fünfte Ausführungsform des Verbindungsmittels 100 hinsichtlich Aufbau und Funktion mit der in den Fig. 1 bis 31 dargestellten ersten Ausführungsform überein, auf deren vorstehende Beschreibung insoweit Bezug genommen wird.

Besondere Ausführungsformen der vorliegenden Erfindung sind die Folgenden:
1. Verbindungsmittel zum Verbinden eines ersten Bauteils (102) und eines zweiten Bauteils (104), insbesondere zum Verbinden von Möbel- oder Maschinenteilen, umfassend
   ein im verbundenen Zustand der Bauteile an dem ersten Bauteil (102) angeordnetes erstes Verbindungselement (184) und ein im verbundenen Zustand der Bauteile an dem zweiten Bauteil (104) angeordnetes zweites Verbindungselement (186),
   dadurch gekennzeichnet,
   dass mindestens eines der Verbindungselemente (184, 186) mindestens einen nicht-selbstschneidenden Haltevorsprung (200) umfasst, welcher eine gekrümmte Abstützfläche (204) aufweist, die in einem Längsschnitt kreisbogenförmig ist,
   wobei der Haltevorsprung (200) in eine an einem der Bauteile (102, 104) vorgesehene Nut (110) mit einer gekrümmten Hinterschneidungsfläche (122), die in einem Längsschnitt kreisbogenförmig ist, einführbar ist.
2. Verbindungsmittel nach Ausführungsform 1, dadurch gekennzeichnet, dass mindestens eines der Verbindungselemente (184, 186) eine gekrümmte Abstützfläche (190) umfasst, die in einem Längsschnitt kreisbogenförmig ist und an einer ebenfalls im Längsschnitt kreisbogenförmigen Nutgrundfläche (118) einer an einem der Bauteile (102, 104) vorgesehenen Nut (110) abgleiten kann.
3. Verbindungsmittel nach einer der Ausführungsformen 1 oder 2, dadurch gekennzeichnet, dass mindestens ein Haltevorsprung (200) einen im Wesentlichen rechteckigen oder einen im Wesentlichen trapezförmigen Querschnitt aufweist.
4. Verbindungsmittel nach einer der Ausführungsformen 1 bis 3, dadurch gekennzeichnet, dass mindestens ein Haltevorsprung (200) sich mit wachsendem Abstand von einem Grundkörper des jeweiligen Verbindungselements (184, 186) verjüngt.
5. Verbindungsmittel nach einer der Ausführungsformen 1 bis 4, dadurch gekennzeichnet, dass mindestens ein Haltevorsprung (200) sich mit abnehmenden Abstand von einem Grundkörper des jeweiligen Verbindungselements (184, 186) verjüngt.
6. Verbindungsmittel nach einer der Ausführungsformen 1 bis 5, dadurch gekennzeichnet, dass mindestens ein Haltevorsprung (200) einen Querschnitt mit einer zumindest abschnittsweise gekrümmten Außenkontur aufweist.
7. Verbindungsmittel nach einer der Ausführungsformen 1 bis 6, dadurch gekennzeichnet, dass mindestens ein Haltevorsprung (200) im Wesentlichen flächenbündig an eine gekrümmte Anlagefläche (190) eines Grundkörpers des jeweiligen Verbindungselements (184, 186) angrenzt.
8. Verbindungsmittel nach einer der Ausführungsformen 1 bis 6, dadurch gekennzeichnet, dass mindestens ein Haltevorsprung (200) gegenüber einer gekrümmten Anlagefläche (190) eines Grundkörpers des jeweiligen Verbindungselements (184, 186) versetzt angeordnet ist.
9. Verbindungsmittel nach einer der Ausführungsformen 7 oder 8, dadurch gekennzeichnet, dass die gekrümmte Anlagefläche (190) des Grundkörpers in einem Längsschnitt kreisbogenförmig ist.
10. Verbindungsmittel nach einer der Ausführungsformen 1 bis 9, dadurch gekennzeichnet, dass das erste Verbindungselement (184) und das zweite Verbindungselement (186) im verbundenen Zustand der Bauteile (102, 104) lösbar miteinander verbunden sind und zumindest das erste Verbindungselement (184) mindestens ein relativ zu einem Gehäuse (188) des ersten Verbindungselements (184) bewegliches Halteelement (212) umfasst, das in einer Haltestellung so mit dem zweiten Verbindungselement (186) zusammenwirkt, dass eine Relativbewegung des ersten Verbindungselements (184) und des zweiten Verbindungselements (186) längs einer Verbindungsrichtung (196) verhindert wird, und das in einer Freigabestellung eine Relativbewegung des ersten Verbindungselements (184) und des zweiten Verbindungselements (186) längs der Verbindungsrichtung (196) zulässt, wobei mindestens ein Halteelement (212) durch eine Einwirkung von außerhalb des Verbindungsmittels (100) von der Haltestellung in die Freigabestellung und/oder von der Freigabestellung in die Haltestellung bewegbar ist.
11. Verbindungsmittel nach Ausführungsform 10, dadurch gekennzeichnet, dass mindestens ein Halteelement (212) schwenkbar an dem ersten Verbindungselement (184) gehalten ist.
12. Verbindungsmittel nach einer der Ausführungsformen 10 oder 11, dadurch gekennzeichnet, dass mindestens ein Halteelement (212) eine erste Haltekontur (226) aufweist, welche in der Haltestellung eine an dem zweiten Verbindungselement (186) vorgesehene zweite Haltekontur (240) hintergreift.
13. Verbindungsmittel nach Ausführungsform 12, dadurch gekennzeichnet, dass die erste Haltekontur (226) und/oder die zweite Haltekontur (240) bogenförmig ausgebildet sind.
14. Verbindungsmittel nach Ausführungsform 13, dadurch gekennzeichnet, dass die erste Haltekontur (226) und die zweite Haltekontur (240) nicht konzentrisch zueinander ausgebildet sind, so dass die beiden Verbindungselemente (184, 186) beim Bewegen des Halteelements (212) von der Freigabestellung in die Haltestellung gegeneinander gezogen werden.
15. Verbindungsmittel nach einer der Ausführungsformen 10 bis 14, dadurch gekennzeichnet, dass mindestens ein Halteelement (212) mittels eines von außerhalb des Verbindungselements (100) mit dem Halteelement (212) in Eingriff bringbaren mechanischen Betätigungsmittels (244) von der Haltestellung in die Freigabestellung und/oder von der Freigabestellung in die Haltestellung bewegbar ist.
16. Verbindungsmittel nach Ausführungsform 15, dadurch gekennzeichnet, dass mindestens ein Halteelement (212) eine Aufnahme für einen Betätigungsabschnitt eines mechanischen Betätigungsmittels (244) aufweist.
17. Verbindungsmittel nach Ausführungsform 16, dadurch gekennzeichnet, dass mindestens ein Halteelement (212) eine Aufnahme (220; 256) für einen Mehrkantschlüssel (244), einen Inbusschlüssel und/oder einen Schraubendreher aufweist.
18. Verbindungsmittel nach einer der Ausführungsformen 10 bis 17, dadurch gekennzeichnet, dass das erste Verbindungselement (184) ein Gehäuse (188) mit einer Durchtrittsöffnung (222) für den Durchtritt eines mechanischen Betätigungsmittels (244) zu einem Halteelement (212) umfasst.
19. Verbindungsmittel nach Ausführungsform 18, dadurch gekennzeichnet, dass das Gehäuse (188) eine sich quer zur gekrümmten Anlagefläche (190) des ersten Verbindungselements (184) erstreckende Seitenwand aufweist und die Durchtrittsöffnung (222) in der Seitenwand angeordnet ist.
20. Verbindungsmittel nach Ausführungsform 18, dadurch gekennzeichnet, dass die Durchtrittsöffnung (222) an der gekrümmten Anlagefläche (190) des ersten Verbindungselements (184) angeordnet ist.
21. Verbindungsmittel nach einer der Ausführungsformen 10 bis 20, dadurch gekennzeichnet, dass zumindest das erste Verbindungselement (184) mindestens zwei Halteelemente (212) umfasst, die schwenkbar an dem ersten Verbindungselement (184) gehalten sind.
22. Verbindungsmittel nach Ausführungsform 21, dadurch gekennzeichnet, dass mindestens zwei Halteelemente (212) in der Haltestellung jeweils ein Rückhalteelement (366), das an dem zweiten Verbindungselement (186) angeordnet ist, hintergreifen.
23. Verbindungsmittel nach einer der Ausführungsformen 21 oder 22, dadurch gekennzeichnet, dass ein Abstützbereich (332) eines ersten Halteelements (212) und ein Abstützbereich (332) eines zweiten Halteelements (212) mittels eines Spreizmechanismus (336) relativ zueinander bewegbar sind.
24. Verbindungsmittel nach Ausführungsform 23, dadurch gekennzeichnet, dass der Spreizmechanismus (336) ein Magnetelement (354) umfasst, das mittels eines von außerhalb des Verbindungsmittels (100) auf das Magnetelement (354) einwirkenden zeitlich veränderlichen Antriebsmagnetfeldes zu einer Bewegung innerhalb des Verbindungsmittels (100) antreibbar ist.
25. Verbindungsmittel nach Ausführungsform 24, dadurch gekennzeichnet, dass der Spreizmechanismus (336) mindestens zwei Spreizelemente (338, 346) umfasst, die miteinander in Eingriff stehen.
26. Verbindungsmittel nach Ausführungsform 25, dadurch gekennzeichnet, dass die Spreizelemente (338, 346) mittels zweier zueinander komplementärer Gewinde miteinander in Eingriff stehen.
27. Verbindungsmittel nach einer der Ausführungsformen 25 oder 26, dadurch gekennzeichnet, dass mindestens eines der Spreizelemente (346) mittels des Magnetelements (354) zu einer Drehbewegung relativ zu dem anderen Spreizelement (338) antreibbar ist.
28. Verbindungsmittel nach Ausführungsform 27, dadurch gekennzeichnet, dass das Magnetelement (354) ein Mitnehmerelement (358) aufweist, das auf ein Mitnahmeelement (352) an einem der Spreizelemente (346) einwirkt.
29. Verbindungsmittel nach einer der Ausführungsformen 10 bis 28, dadurch gekennzeichnet, dass mindestens ein Halteelement (212) ein Gewinde (248; 282) aufweist.
30. Verbindungsmittel nach Ausführungsform 29, dadurch gekennzeichnet, dass mindestens ein Halteelement (212) in der Haltestellung mit einem Rückhalteelement (252; 316), das an dem zweiten Verbindungselement (186) angeordnet ist, in Eingriff steht, wobei das Rückhalteelement (252; 316) ein zu dem Gewinde (248; 282) des Halteelements (212) komplementäres Gewinde (250; 314) aufweist.
31. Verbindungsmittel nach Ausführungsform 30, dadurch gekennzeichnet, dass das Verbindungsmittel (100) mindestens ein elastisches Element (324) umfasst, durch welches das Halteelement (212) und das Rückhalteelement (316) gegeneinander vorgespannt sind.
32. Verbindungsmittel nach einer der Ausführungsformen 29 bis 31, dadurch gekennzeichnet, dass eine Gewindeachse (296) des Halteelements (212) im verbundenen Zustand der Bauteile (102, 104) im Wesentlichen parallel zur Verbindungsrichtung (196) ausgerichtet ist.
33. Verbindungsmittel nach einer der Ausführungsformen 1 bis 32, dadurch gekennzeichnet, dass das Verbindungsmittel (100) ein Magnetelement (298) umfasst, das mittels eines von außerhalb des Verbindungsmittels (100) auf das Magnetelement (298) einwirkenden zeitlich veränderlichen Antriebsmagnetfeldes zu einer Drehbewegung innerhalb des Verbindungsmittels (100) antreibbar ist.
34. Verbindungsmittel nach Ausführungsform 33, dadurch gekennzeichnet, dass mindestens ein Halteelement (212) mittels des Magnetelements (298) zu einer Drehbewegung relativ zu dem Gehäuse (188) des ersten Verbindungselements (184) antreibbar ist.
35. Verbindungsmittel nach Ausführungsform 34, dadurch gekennzeichnet, dass das Magnetelement (298) ein Mitnehmerelement (300) aufweist, das auf ein Mitnahmeelement (286) an dem Halteelement (212) einwirkt.
36. Verbindungsmittel nach einer der Ausführungsformen 1 bis 35, dadurch gekennzeichnet, dass mindestens eines der Verbindungselemente (184) mindestens einen Einsteckvorsprung (228; 326) und das jeweils andere Verbindungselement (186) mindestens eine den Einsteckvorsprung (228; 326) im verbundenen Zustand der Bauteile (102, 104) aufnehmende Aufnahmetasche (232; 328) umfasst.
37. Verbindungsmittel nach Ausführungsform 36, dadurch gekennzeichnet, dass mindestens eine Aufnahmetasche (232; 328) in einer Längsrichtung (192) des Verbindungsmittels (100) eine größere Ausdehnung aufweist als der darin aufgenommene Einsteckvorsprung (228; 326).
38. Verbindungsmittel nach einer der Ausführungsformen 1 bis 37, dadurch gekennzeichnet, dass das erste Verbindungselement (184) und das zweite Verbindungselement (186) im verbundenen Zustand der Bauteile (102, 104) stoffschlüssig miteinander verbunden sind.
39. Verbindungsmittel nach Ausführungsform 38, dadurch gekennzeichnet, dass das erste Verbindungselement (184) und das zweite Verbindungselement (186) im verbundenen Zustand der Bauteile (102, 104) miteinander verklebt sind.
40. Verfahren zum Herstellen einer Verbindung eines ersten Bauteils (102) und eines zweiten Bauteils (104), insbesondere einer Verbindung von Möbel- oder Maschinenteilen, umfassend die folgenden Verfahrensschritte:
   - Herstellen jeweils einer Nut (110) an einer Kontaktfläche (106) des ersten Bauteils (102) und an einer Kontaktfläche (108) des zweiten Bauteils (104), wobei mindestens eine der Nuten (110) mindestens einen Hinterschneidungsabschnitt (114) mit einer gekrümmten Hinterschneidungsfläche (122) aufweist, die in einem Längsschnitt kreisbogenförmig ist;
   - Einbringen eines ersten Verbindungselements (184) in die Nut (110) des ersten Bauteils (102) und eines zweiten Verbindungselements (186) in die Nut (110) des zweiten Bauteils (104), wobei mindestens eines der Verbindungselemente (184, 186) mindestens einen Haltevorsprung (200) mit einer gekrümmten Abstützfläche (204) umfasst, die in einem Längsschnitt kreisbogenförmig ist;
   - Verbinden des ersten Verbindungselements (184) und des zweiten Verbindungselements (186).
41. Verfahren nach Ausführungsform 40, dadurch gekennzeichnet, dass mindestens eine der Nuten (110) vollständig hergestellt ist, bevor das zugehörige Verbindungselement (184, 186) in die Nut (110) eingebracht wird.
42. Verfahren nach einer der Ausführungsformen 40 oder 41, wobei das erste Verbindungselement (184) und das zweite Verbindungselement (186) lösbar miteinander verbunden werden, indem zumindest ein an dem ersten Verbindungselement (184) relativ zu einem Gehäuse (188) des ersten Verbindungselements (184) beweglich angeordnetes Halteelement (212) von einer Freigabestellung, in welcher das Halteelement (212) eine Relativbewegung des ersten Verbindungselements (184) und des zweiten Verbindungselements (186) längs einer Verbindungsrichtung (196) zulässt, durch eine Einwirkung von außerhalb des ersten Verbindungselements (184) in eine Haltestellung bewegt wird, in welcher das Halteelement (212) eine Relativbewegung des ersten Verbindungselements (184) und des zweiten Verbindungselements (186) längs der Verbindungsrichtung (196) zulässt.
43. Verfahren nach Ausführungsform 42, dadurch gekennzeichnet, dass mindestens ein Halteelement (212) von der Freigabestellung in die Haltestellung geschwenkt wird.
44. Verfahren nach einer der Ausführungsformen 41 oder 42, dadurch gekennzeichnet, dass in der Haltestellung eine an mindestens einem Halteelement (212) vorgesehene erste Haltekontur (226) eine an dem zweiten Verbindungselement (186) vorgesehene zweite Haltekontur (240) hintergreift.
45. Verfahren nach Ausführungsform 44, dadurch gekennzeichnet, dass die erste Haltekontur (226) und die zweite Haltekontur (240) beim Bewegen des Halteelements (212) von der Freigabestellung in die Haltestellung so aufeinander einwirken, dass die beiden Verbindungselemente (184, 186) gegeneinander gezogen werden.
46. Verfahren nach einer der Ausführungsformen 42 bis 45, dadurch gekennzeichnet, dass mindestens ein Halteelement (212) mittels eines von außerhalb des ersten Verbindungselements (184) mit dem Halteelement (212) in Eingriff bringbaren mechanischen Betätigungsmittels (244) von der Haltestellung in die Freigabestellung bewegt wird.
47. Verfahren nach einer der Ausführungsformen 42 bis 46, dadurch gekennzeichnet, dass zum lösbaren Verbinden des ersten Verbindungselements (184) und des zweiten Verbindungselements (186) mindestens zwei Halteelemente (212) von einer Freigabestellung in eine Haltestellung geschwenkt werden.
48. Verfahren nach Ausführungsform 47, dadurch gekennzeichnet, dass mindestens zwei Halteelemente (212) in der Haltestellung jeweils ein Rückhalteelement (366), das an dem zweiten Verbindungselement (186) angeordnet ist, hintergreifen.
49. Verfahren nach einer der Ausführungsformen 47 oder 48, dadurch gekennzeichnet, dass ein Abstützbereich (332) eines ersten Halteelements (212) und ein Abstützbereich (332) eines zweiten Halteelements (212) mittels eines Spreizmechanismus (336) relativ zueinander bewegt werden.
50. Verfahren nach Ausführungsform 49, dadurch gekennzeichnet, dass mittels eines von außerhalb der Verbindungselemente (184, 186) auf ein Magnetelement (354) einwirkenden zeitlich veränderlichen Antriebsmagnetfeldes das Magnetelement (354) zu einer Bewegung innerhalb eines der Verbindungselemente (184, 186) angetrieben wird.
51. Verfahren nach einer der Ausführungsformen 49 oder 50, dadurch gekennzeichnet, dass der Spreizmechanismus (336) mindestens zwei Spreizelemente (338, 346) umfasst und mindestens eines der Spreizelemente (346) mittels eines Magnetelements (354) zu einer Drehbewegung relativ zu dem anderen Spreizelement (338) angetrieben wird.
52. Verfahren nach Ausführungsform 51, dadurch gekennzeichnet, dass das Magnetelement (354) mittels eines Mitnehmerelements (358) auf ein Mitnahmeelement (352) an einem der Spreizelemente (346) einwirkt.
53. Verfahren nach einer der Ausführungsformen 42 bis 52, dadurch gekennzeichnet, dass mindestens ein Halteelement (212) bei der Bewegung von der Freigabestellung in die Haltestellung in ein Gewinde (314) eines Rückhalteelements (316), das an dem zweiten Verbindungselement (186) angeordnet ist, eingeschraubt wird.
54. Verfahren nach Ausführungsform 53, dadurch gekennzeichnet, dass das Halteelement (212) und das Rückhalteelement (316) durch ein elastisches Element (324) gegeneinander vorgespannt werden.
55. Verfahren nach einer der Ausführungsformen 53 oder 54, dadurch gekennzeichnet, dass ein Magnetelement (298) mittels eines von außerhalb der Verbindungselemente (184, 186) auf das Magnetelement (298) einwirkenden zeitlich veränderlichen Antriebsmagnetfeldes zu einer Drehbewegung innerhalb eines der Verbindungselemente (184, 186) angetrieben wird.
56. Verfahren nach Ausführungsform 55, dadurch gekennzeichnet, dass mindestens ein Halteelement (212) mittels des Magnetelements (298) zu einer Drehbewegung relativ zu einem Rückhalteelement (316) angetrieben wird.
57. Verfahren nach Ausführungsform 56, dadurch gekennzeichnet, dass das Magnetelement (298) mittels eines Mitnehmerelements (300) auf ein Mitnahmeelement (286) an dem Halteelement (212) einwirkt.
58. Verfahren nach einer der Ausführungsformen 40 bis 57, dadurch gekennzeichnet, dass mindestens ein Einsteckvorsprung (228; 326) eines der Verbindungselemente (184) in mindestens eine Aufnahmetasche (232; 328) des jeweils anderen Verbindungselements (186) eingebracht wird.
59. Verfahren nach einer der Ausführungsformen 40 bis 58, dadurch gekennzeichnet, dass das erste Verbindungselement (184) und das zweite Verbindungselement (186) stoffschlüssig miteinander verbunden werden.
60. Verfahren nach Ausführungsform 59, dadurch gekennzeichnet, dass das erste Verbindungselement (184) und das zweite Verbindungselement (186) miteinander verklebt werden.
61. Nutfräsvorrichtung zum Fräsen einer Nut (110) in einem Bauteil (102, 104), umfassend eine um eine Rotationsachse (142) drehbare Frässcheibe (140), dadurch gekennzeichnet, dass die Nutfräsvorrichtung (130) eine Hubeinrichtung (150) zum Bewegen der Frässcheibe (140) längs der Rotationsachse (142) während des Fräsvorgangs umfasst.
62. Nutfräsvorrichtung nach Ausführungsform 61, dadurch gekennzeichnet, dass die Nutfräsvorrichtung (130) einen Anschlag zur Begrenzung der Tiefe der gefrästen Nut (110) umfasst.
63. Nutfräsvorrichtung nach einer der Ausführungsformen 61 oder 62, dadurch gekennzeichnet, dass die Nutfräsvorrichtung (130) einen Schalter zur Betätigung der Hubeinrichtung (150) durch eine Bedienungsperson während des Fräsvorgangs umfasst.
64. Nutfräsvorrichtung nach einer der Ausführungsformen 61 bis 63, dadurch gekennzeichnet, dass die Nutfräsvorrichtung (130) eine Steuereinrichtung umfasst, welche die Hubeinrichtung (150) bei Erreichen einer vorgegebenen Tiefe der gefrästen Nut (110) während des Fräsvorgangs automatisch betätigt.
65. Nutfräsvorrichtung nach einer der Ausführungsformen 61 bis 64, dadurch gekennzeichnet, dass die Frässcheibe (140) mittels der Hubeinrichtung (150) aus einer Grundstellung längs der Rotationsachse (142) in eine erste Hinterschneidungsstellung und anschließend in entgegengesetzter Richtung, über die Grundstellung hinaus, in eine zweite Hinterschneidungsstellung bewegbar ist.
66. Nutfräsvorrichtung nach einer der Ausführungsformen 61 bis 65, dadurch gekennzeichnet, dass die Strecke, um welche die Frässcheibe (140) mittels der Hubeinrichtung (150) längs der Rotationsachse (142) bewegbar ist, auf verschiedene Werte einstellbar ist.
67. Nutfräsvorrichtung nach einer der Ausführungsformen 61 bis 66, dadurch gekennzeichnet, dass die für die Betätigung der Hubeinrichtung (150) erforderliche Energie mittels eines an eine Hauptantriebsspindel der Nutfräsvorrichtung (130) angekoppelten Generators erzeugbar ist.
68. Nutfräsvorrichtung nach Ausführungsform 67, dadurch gekennzeichnet, dass der Generator als eine Wirbelstromkupplung ausgebildet ist.
69. Nutfräsvorrichtung zum Fräsen einer Nut (110) in einem Bauteil (102, 104), umfassend einen T-Nuten-Fräser (164), der um eine Radialrichtung der Nut (110) drehbar ist, dadurch gekennzeichnet, dass die Nutfräsvorrichtung (158) eine Führungseinrichtung (172) zum Führen der Nutfräsvorrichtung (158) in einer vorgefrästen Führungsnut (174) mit einer gekrümmten Nutgrundfläche, die in einem Längsschnitt kreisbogenförmig ist, umfasst.
70. Nutfräsvorrichtung nach Ausführungsform 69, dadurch gekennzeichnet, dass die Führungseinrichtung (172) ein im Wesentlichen kreisscheibenausschnittsförmiges vorderes Führungselement (176) umfasst, das in der Bewegungsrichtung der Nutfräsvorrichtung (158) während des Fräsvorgangs vor dem T-Nuten-Fräser (164) angeordnet ist.
71. Nutfräsvorrichtung nach Ausführungsform 70, dadurch gekennzeichnet, dass die Dicke des vorderen Führungselements (176) im Wesentlichen gleich groß ist wie die Breite (B') der vorgefrästen Führungsnut (174).
72. Nutfräsvorrichtung nach einer der Ausführungsformen 69 bis 71, dadurch gekennzeichnet, dass die Führungseinrichtung (172) ein im Wesentlichen kreisscheibenausschnittsförmiges hinteres Führungselement (178) umfasst, das in der Bewegungsrichtung der Nutfräsvorrichtung (158) während des Fräsvorgangs hinter dem T-Nuten-Fräser (164) angeordnet ist.
73. Nutfräsvorrichtung nach Ausführungsform 72, dadurch gekennzeichnet, dass die Dicke des hinteren Führungselements (178) im Wesentlichen gleich groß ist wie die Breite (B) eines Basisabschnitts der von dem T-Nuten-Fräser (164) gefrästen Nut.
74. Nutfräsvorrichtung nach einer der Ausführungsformen 72 oder 73, dadurch gekennzeichnet, dass das hintere Führungselement (178) mit mindestens einem Führungszahn (180) versehen ist, der während des Fräsvorgangs in einen Hinterschneidungsabschnitt (114) der von dem T-Nuten-Fräser gefrästen Nut (110) eingreift und dadurch die Nutfräsvorrichtung (158) führt.

## Patentansprüche

1. Verbindungsmittel zum Verbinden eines ersten Bauteils (102) und eines zweiten Bauteils (104), insbesondere zum Verbinden von Möbel- oder Maschinenteilen, umfassend
ein im verbundenen Zustand der Bauteile an dem ersten Bauteil (102) angeordnetes erstes Verbindungselement (184) und
ein im verbundenen Zustand der Bauteile an dem zweiten Bauteil (104) angeordnetes zweites Verbindungselement (186),
**dadurch gekennzeichnet,**
**dass** mindestens eines der Verbindungselemente (184, 186) nichtselbstschneidende Haltevorsprünge (200) umfasst, welche jeweils eine gekrümmte Abstützfläche (204) aufweisen, die in einem Längsschnitt kreisbogenförmig ist,
wobei die Haltevorsprünge (200) in eine an einem der Bauteile (102, 104) vorgesehene Nut (110) mit einer gekrümmten Hinterschneidungsfläche (122), die in einem Längsschnitt kreisbogenförmig ist, einführbar sind,
wobei die Nut (110) einen Basisabschnitt (112) und zwei sich in einer Dickenrichtung (116) von dem Basisabschnitt (112) weg erstreckende Hinterschneidungsabschnitte (114) umfasst und
wobei die Haltevorsprünge (200) im verbundenen Zustand der Bauteile in die Hinterschneidungsabschnitte (114) der Nut (110) eingreifen.

2. Verbindungsmittel nach Anspruch 1, **dadurch gekennzeichnet, dass** das erste Verbindungselement (184) und das zweite Verbindungselement (186) im verbundenen Zustand der Bauteile (102, 104) miteinander verbunden sind.

3. Verbindungsmittel nach einem der Ansprüche 1 oder 2, **dadurch gekennzeichnet, dass** das erste Verbindungselement (184) ein Halteelement (212) und das zweite Verbindungselement (186) eine Aufnahme für das Halteelement (212) umfasst.

4. Verbindungsmittel nach Anspruch 3, **dadurch gekennzeichnet, dass** das Halteelement (212) eine erste Haltekontur (226) aufweist, welche in einer Haltestellung eine an dem zweiten Verbindungselement (186) vorgesehene zweite Haltekontur (240) hintergreift.

5. Verbindungsmittel nach einem der Ansprüche 1 bis 4, **dadurch gekennzeichnet, dass** das erste Verbindungselement (184) eine im Wesentlichen ebene Anlegefläche (194), die an das zweite Verbindungselement (186) anlegbar ist, umfasst.

6. Verbindungsmittel nach Anspruch 5, **dadurch gekennzeichnet, dass** die im Wesentlichen ebene Anlegefläche (194) des ersten Verbindungselements (184) im verbundenen Zustand der Bauteile (102, 104) im Wesentlichen parallel zu Kontaktflächen (106, 108) der Bauteile (102, 104), an welchen die Bauteile (102, 104) aneinander anliegen, ausgerichtet ist.

7. Verbindungsmittel nach einem der Ansprüche 1 bis 6, **dadurch gekennzeichnet, dass** mindestens ein Haltevorsprung (200) einen im Wesentlichen rechteckigen oder einen im Wesentlichen trapezförmigen Querschnitt aufweist.

8. Verbindungsmittel nach einem der Ansprüche 1 bis 7, **dadurch gekennzeichnet, dass** mindestens ein Haltevorsprung (200) sich mit wachsendem Abstand von einem Grundkörper des jeweiligen Verbindungselements (184, 186) verjüngt.

9. Verbindungsmittel nach einem der Ansprüche 1 bis 8, **dadurch gekennzeichnet, dass** mindestens ein Haltevorsprung (200) im Wesentlichen flächenbündig an eine gekrümmte Anlagefläche (190) eines Grundkörpers des jeweiligen Verbindungselements (184, 186) angrenzt.

10. Verbindungsmittel nach einem der Ansprüche 1 bis 9, **dadurch gekennzeichnet, dass** das Verbindungsmittel (100) ein Magnetelement (298) umfasst, das mittels eines von außerhalb des Verbindungsmittels (100) auf das Magnetelement (298) einwirkenden zeitlich veränderlichen Antriebsmagnetfeldes zu einer Drehbewegung innerhalb des Verbindungsmittels (100) antreibbar ist.

11. Verbindungsmittel nach Anspruch 10, **dadurch gekennzeichnet, dass** mindestens ein Halteelement (212) mittels des Magnetelements (298) zu einer Drehbewegung relativ zu dem Gehäuse (188) des ersten Verbindungselements (184) antreibbar ist.

12. Verbindungsmittel nach einem der Ansprüche 1 bis 11, **dadurch gekennzeichnet, dass** mindestens eines der Verbindungselemente (184) mindestens einen Einsteckvorsprung (228; 326) und das jeweils andere Verbindungselement (186) mindestens eine den Einsteckvorsprung (228; 326) im verbundenen Zustand der Bauteile (102, 104) aufnehmende Aufnahmetasche (232; 328) umfasst.

13. Verbindungsmittel nach einem der Ansprüche 1 bis 12, **dadurch gekennzeichnet, dass** das erste Verbindungselement (184) und das zweite Verbindungselement (186) im verbundenen Zustand der Bauteile (102, 104) stoffschlüssig miteinander verbunden, insbesondere verklebt, sind.

14. Verfahren zum Herstellen einer Verbindung eines ersten Bauteils (102) und eines zweiten Bauteils (104), insbesondere einer Verbindung von Möbel- oder Maschinenteilen, umfassend die folgenden Verfahrensschritte:
- Herstellen jeweils einer Nut (110) an einer Kontaktfläche (106) des ersten Bauteils (102) und an einer Kontaktfläche (108) des zweiten Bauteils (104), wobei mindestens eine der Nuten (110) einen Basisabschnitt (112) und zwei sich in einer Dickenrichtung (116) von dem Basisabschnitt (112) weg erstreckende Hinterschneidungsabschnitte (114) mit jeweils einer gekrümmten Hinterschneidungsfläche (122), die in einem Längsschnitt kreisbogenförmig ist, umfasst;
- Einbringen eines ersten Verbindungselements (184) in die Nut (110) des ersten Bauteils (102) und eines zweiten Verbindungselements (186) in die Nut (110) des zweiten Bauteils (104), wobei mindestens eines der Verbindungselemente (184, 186) Haltevorsprünge (200) mit jeweils einer gekrümmten Abstützfläche (204) umfasst, die in einem Längsschnitt kreisbogenförmig ist, und wobei die Haltevorsprünge (200) in die Hinterschneidungsabschnitte (114) der Nut (110) eingreifen;
- Verbinden des ersten Verbindungselements (184) und des zweiten Verbindungselements (186).

15. Verfahren nach Anspruch 14, **dadurch gekennzeichnet, dass** mindestens eine der Nuten (110) vollständig hergestellt ist, bevor das zugehörige Verbindungselement (184, 186) in die Nut (110) eingebracht wird.
